# EUROPÄISCHE PATENTANMELDUNG

(11) **EP 4 572 106 A1**
(43) Veröffentlichungstag der Anmeldung: **18.06.2025**
(21) Anmeldenummer: 23216640.5
(22) Anmeldetag: 14.12.2023
(51) Int. Cl.: H02K 11/215

(54) **ELEKTROMOTOR, VERFAHREN ZUR HERSTELLUNG EINES ELEKTROMOTORS UND KÜCHENMASCHINE**

(71) Anmelder: Vorwerk & Co. Interholding GmbH, 42275 Wuppertal (DE)
(72) Erfinder: SCHEUCH, Andreas, 58636 Iserlohn (DE); SCHMIDT, Dirk, 51688 Wipperfürth (DE); BUSSE, Kevin, 42859 Remscheid (DE)
(74) Vertreter: Von Rohr Patentanwälte Partnerschaft mbB

(57) **Zusammenfassung**

Es wird ein Elektromotor, insbesondere für eine Küchenmaschine, mit einem Stator und einem Rotor mit einer Rotorwelle vorgeschlagen, wobei der Elektromotor eine Sensoranordnung zur Erfassung der Rotorposition und/oder Rotorbewegung mit einem feststehenden Sensor und einem mit der Rotorwelle verbundenen Magneten und einer Magnethalterung aufweist. Der Magnet ist kraft- und/oder formschlüssig mit der Magnethalterung verbunden, wobei die Magnethalterung kraft- und/oder formschlüssig mit der Rotorwelle verbunden ist. Der Magnet und/oder die Magnethalterung ist zusätzlich mittels einer Klebverbindung mit der Rotorwelle verbunden. Ferner wird ein Verfahren zur Herstellung eines entsprechenden Elektromotors und eine Küchenmaschine mit einem entsprechenden Elektromotor vorgeschlagen.

## Beschreibung

Die vorliegende Erfindung betrifft einen Elektromotor, insbesondere für eine Küchenmaschine, gemäß dem Oberbegriff von Anspruch 1, ein Verfahren zur Herstellung eines Elektromotors gemäß Anspruch 12 sowie eine Küchenmaschine mit einem Elektromotor gemäß Anspruch 15.

Elektromotoren, beispielsweise in Form von bürstenlosen Gleichstrommotoren (BLDC-Motoren) oder geschalteten Reluktanzmotoren (SR-Motoren), sind aus dem Stand der Technik bekannt und weisen einen Ständer/Stator und einen relativ zum Stator rotierenden Läufer/Rotor auf.

Besondere Herausforderungen ergeben sich bei Elektromotoren, die über große Drehzahl- und Drehmomentbandbreiten arbeiten, beispielsweise beim Einsatz in einer Küchenmaschine. Für eine Vielzahl von Anwendungen ist es nicht nur wichtig, die Drehzahl genau zu bestimmen und/oder zu regeln bzw. zu steuern, sondern auch die genaue Position des Rotors zu bestimmen und/oder zu regeln bzw. zu steuern.

Zudem sollte der Motor beim Einsatz in einer Küchenmaschine klein und kompakt ausgebildet sein, da diese sonst zu groß für den Einsatz im Küchenbereich wird.

Die DE 10 2011 112 822 A1 offenbart einen Elektromotor mit einem Stator und einem innerhalb des Stators drehbar gelagerten Rotor mit einer Rotorwelle. Die Rotorbewegungen werden mittels einer Sensoranordnung sensorisch erfasst, die einen feststehenden Sensor und einen dem Sensor zugeordneten, an der Rotorwelle befestigten Magneten aufweist. Der Elektromotor weist eine von der Rotorwelle separat ausgestaltete Magnethalterung für den Magneten auf. Der Magnet ist kraftschlüssig und/oder formschlüssig in der Magnethalterung gehalten. Im montierten Zustand ist die Magnethalterung formschlüssig und/oder kraftschlüssig mit einem Rotorwellenende der Rotorwelle verbunden. Bei hohen Drehzahlen und/oder durch Verschleiß kann es zu einer relativen Drehbewegung zwischen der Rotorwelle und der Magnethalterung und/oder zwischen dem Magneten und der Rotorwelle und/oder der Magnethalterung kommen, was zu einer ungenauen Erfassung der Rotorbewegung und/oder Rotorposition führen kann.

Der vorliegenden Erfindung liegt die Aufgabe zugrunde, einen verbesserten Elektromotor, ein Verfahren zur Herstellung eines Elektromotors und eine Küchenmaschine mit einem verbesserten Elektromotor anzugeben, wobei die Rotorbewegung und/oder Rotorposition in einfacher und besonders zuverlässiger Weise erfasst werden können, wobei der Elektromotor eine einfache, kompakte, stabile und/oder kostengünstige Konstruktion aufweist bzw. eine einfache, schnelle, kompakte, stabile und/oder kostengünstige Montage/Herstellung ermöglicht.

Die der Erfindung zugrunde liegende Aufgabe wird durch einen Elektromotor gemäß Anspruch 1, ein Verfahren gemäß Anspruch 12 oder eine Küchenmaschine gemäß Anspruch 15 gelöst. Vorteilhafte Weiterbildungen sind Gegenstand der Unteransprüche.

Der vorschlagsgemäße Elektromotor weist einen (feststehenden) Stator und einen relativ zum Stator um eine Rotationsachse drehbaren Rotor auf. Zur sensorischen Erfassung der Rotorbewegung und/oder der Rotorposition weist der Elektromotor eine Sensoranordung auf.

Unter dem Begriff "Rotorbewegung" ist im Rahmen der vorliegenden Erfindung die Drehbewegung des Rotors um die Rotationsachse bzw. relativ zum Stator zu verstehen. Unter dem Begriff "Rotorposition" im Rahmen der vorliegenden Erfindung ist der Drehwinkel bzw. die Winkellage eines Referenzpunkt des Rotors zu einem Referenzpunkt des Stators zu verstehen.

Die Sensoranordnung besteht - nicht abschließend - aus einem Sensor, einem Magneten und einer Magnethalterung.

Der Magnet ist drehfest mit der Rotorwelle verbunden, während der Sensor feststehend, also mit dem Stator verbunden, ist. Die Magnethalterung ist als von der Rotorwelle separates Bauteil ausgebildet.

Im montierten Zustand ist der Magnet kraft- und/oder formschlüssig mit der Magnethalterung verbunden, wobei die Magnethalterung kraft- und/oder formschlüssig mit einem Rotorwellenende der Rotorwelle verbunden ist.

Gemäß einem Aspekt der vorliegenden Erfindung ist der Magnet und/oder die Magnethalterung zusätzlich mit dem Rotorwellenende verklebt bzw. stoffschlüssig bzw. über eine Klebverbindung verbunden. Durch die Klebverbindung wird eine zusätzliche Sicherung des Magneten und/oder der Magnethalterung an der Rotorwelle geschaffen. Mittels der zusätzlichen Sicherung kann die sensorische Erfassung der Rotorbewegung und/oder der Rotorposition erleichtert und in besonders genauer Weise durchgeführt werden. Gleichzeitig weist die Verbindung eine besonders lange Lebensdauer auf und ist in besonders einfacher und schneller Weise herstellbar.

Eine schnelle und zielgerichtete Aushärtung des Klebstoffs kann dadurch erreicht werden, dass die Magnethalterung transparent für UV-Licht ausgebildet ist und der die Klebverbindung ausbildende Klebstoff als UV-Licht-härtender Klebstoff ausgebildet ist. Der Klebstoff kann dann in besonders einfacher Weise unter Abschirmung von UV-Licht aufgetragen werden. Die Aushärtung kann anschließend gezielt durch die Bestrahlung mittels UV-Licht eingeleitet werden. UV-Licht-härtende Klebstoffe härten bei Bestrahlung mit UV-Licht besonders schnell aus, wodurch die Verbindung in besonders schneller und damit auch kostengünstiger Weise realisiert werden kann.

Die Magnethalterung weist vorzugsweise ein Nutsystem zum Verteilen von Klebstoff auf. Das Nutsystem erlaubt ein besonders zielgerichtetes und gleichmäßiges Verteilen des Klebstoffs. Eine gleichmäßige Verteilung des Klebstoffs ist für die Ausbildung einer großen Klebfläche und somit auch für die Festigkeit der Klebverbindung besonders vorteilhaft.

Das Nutsystem bildet im montierten Zustand zusammen mit einer radialen Außenseite und/oder einer axialen Stirnseite des Rotorwellenendes und/oder dem Magneten ein Verteilkanalsystem für Klebstoff mit wenigstens einem Verteilkanal. Das Verteilkanalsystem wird folglich durch die Montage der Magnethalterung, des Magneten und der Rotorwelle gebildet bzw. erzeugt. Die Herstellung des Verteilkanalsystems kann somit in besonders einfacher Weise erfolgen. Es kann somit ausreichend sein, ein Nutsystem in die Magnethalterung einzubringen.

Das Nutsystem ist vorzugsweise zumindest im Wesentlichen sternförmig ausgebildet. Auf diese Weise kann ein einfach herzustellendes und symmetrisches Nutsystem erhalten werden. Durch die Symmetrie kann eine gleichmäßig ausgebildete Verbindung erzeugt werden, um hohe Kräfte übertragen zu können.

Das Nutsystem weist wenigstens eine radiale Nut und/oder wenigstens eine axiale Nut auf. Es ist insbesondere vorgesehen, dass das Nutsystem wenigstens drei, insbesondere in Umfangsrichtung gleich verteilte und/oder äquidistant zueinander angeordnete, Nuten aufweist.

Die Magnethalterung ist einerseits dazu ausgebildet, den Magneten zu fixieren. Andererseits ist die Magnethalterung ebenfalls dazu ausgebildet, eine Verbindung mit dem Rotorwellenende herzustellen. Um eine gute Anbindung an die Rotorwelle bzw. das Rotorwellenende zu erreichen, ist die Magnethalterung vorzugsweise zumindest im Wesentlichen becherförmig ausgebildet. Auf diese Weise kann eine große Fügefläche zwischen der Magnethalterung und dem Rotorwellenende erhalten werden.

Zur Aufnahme des Magneten weist die Magnethalterung vorzugsweise einen Magnetaufnahmeabschnitt auf. Zur Verbindung mit dem Rotorwellenende weist die Magnethalterung darüber hinaus vorzugsweise einen Verbindungsabschnitt auf. Der Magnetaufnahmeabschnitt und der Verbindungabschnitt sind vorzugsweise jeweils ringförmig ausgebildet, sodass ein sicheres Umschließen des Magneten einerseits und des Rotorwellenendes andererseits möglich ist.

Es ist vorzugsweise vorgesehen, dass der Verbindungsabschnitt wenigstens eine axiale Nut aufweist, um eine Klebverbindung zwischen der Magnethalterung und dem Rotorwellenende zu erzeugen. Alternativ oder zusätzlich weist die Magnethalterung wenigstens eine radiale Nut auf, um den Klebstoff in radialer Richtung verteilen zu können.

Alternativ oder zusätzlich kann die Magnethalterung einen Boden aufweisen, der im montierten Zustand gegen die axiale Stirnseite des Rotorwellenendes anliegen kann. Der Boden kann die wenigstens eine radiale Nut aufweisen.

Der Begriff "anliegen" ist im Rahmen der vorliegenden Erfindung weit zu verstehen und umfasst sowohl ein unmittelbares Anliegen als auch ein mittelbares Anliegen, wobei zwischen den gegeneinander anliegenden Komponenten insbesondere ein Klebstoff vorgesehen sein kann, sofern nichts anderes ausgeführt ist.

Der Boden kann zwischen dem Verbindungsabschnitt und dem Magnetaufnahmeabschnitt angeordnet sein. Insbesondere kann vorgesehen sein, dass der Boden einerseits gegen das Rotorwellenende und andererseits gegen den Magneten anliegt bzw. eine Trennwand zwischen Magnet und Rotorwellenende bildet. Im Bereich des Bodens kann die wenigstens eine radiale Nut ausgebildet sein. Der Boden kann wenigstens eine Durchgangsöffnung zum Durchleiten von Klebstoff durch den Boden aufweisen. Alternativ oder zusätzlich kann der Boden eine den Boden vollständig durchdringende, vorzugsweise kreuzförmige, Nut aufweisen. Auf diese Weise kann ein Verkleben des Magneten mit dem Rotorwellenende sichergestellt werden.

Der Magnet kann als Elektromagnet und/oder Permanentmagnet ausgebildet sein. Bevorzugt ist der Magnet als Permanentmagnet ausgebildet. Die geometrische Form des Magneten ist nicht festgelegt.

In einer bevorzugten Ausführungsform ist der Magnet als, insbesondere zylinderförmiger, Stabmagnet ausgebildet. Die Rotorwelle bzw. das Rotorwellenende kann dann eine Ausnehmung zur zumindest teilweisen bzw. abschnittsweisen Aufnahme des Magneten aufweisen. Auf diese Weise kann eine platzsparende Anordnung des Magneten und damit der Sensoranordnung insbesondere in axialer Richtung der Rotorwelle erreicht werden.

In einer alternativen Ausführungsform ist der Magnet als Scheibenmagnet ausgebildet.

Der Magnet kann an einem axialen Ende bzw. mit einer Flachseite mit mindestens einem innenseitigen Vorsprung der Magnethalterung in eine der beiden axialen Richtungen in formschlüssigem Eingriff stehen. Der Vorsprung ist vorzugsweise innenseitig umlaufend ausgebildet. Auf diese Weise kann eine sichere Fixierung des Magneten in der Magnethalterung realisiert werden.

Vorzugsweise weist die Magnethalterung mindestens ein elastisch auslenkbares Halteelement auf, das mit dem Rotorwellenende formschlüssig, insbesondere mit einer Halteausformung am Rotorwellenende, gegen ein Abziehen der Magnethalterung in Eingriff steht. Auf diese Weise kann eine sichere Fixierung der Magnethalterung am Rotorwellenende in axialer Richtung erzielt werden. Das mindestens eine Halteelement kann zumindest im Wesentlichen hakenartig ausgestaltet sein. Alternativ oder zusätzlich ist die Halteausformung vorzugsweise als zumindest im Wesentlichen umlaufende Haltenut am Rotorwellenende ausgestaltet.

Ein weiterer, auch unabhängig realisierbarer Aspekt der vorliegenden Erfindung betrifft ein Verfahren zum Herstellen eines vorschlagsgemäßen Elektromotors.

Der Elektromotor weist zur sensorischen Erfassung der Rotorbewegung und/oder der Rotorposition eine Sensoranordnung auf, wobei die Sensoranordnung einen feststehenden Sensor, einen Magneten und eine Magnethalterung aufweist. Der Magnet ist drehfest mit der Rotorwelle verbunden. Die Magnethalterung ist separat zur Rotorwelle ausgebildet.

Zwischen der Rotorwelle, der Magnethalterung und/oder dem Magneten wird Klebstoff aufgetragen.

Die mit dem Magneten kraftschlüssig und/oder formschlüssig verbundene Magnethalterung kann derart auf die Rotorwelle bzw. das Rotorwellenende aufgeschoben werden, dass die Magnethalterung und die Rotorwelle kraftschlüssig und/oder formschlüssig miteinander verbunden werden und der Magnet und/oder die Magnethalterung mit der Rotorwelle verklebt werden/wird. Auf diese Weise kann eine besonders einfache und schnell durchzuführende Montage der mit dem Magneten verbundenen Magnethalterung mit der Rotorwelle erfolgen.

Durch die kraftschlüssige und/oder formschlüssige Verbindung und die zusätzliche Ausbildung einer Klebverbindung kann auf einfache Weise eine besonders feste und langlebige Verbindung zwischen der Magnethalterung, dem Magneten und dem Rotorwellenende erzeugt werden.

Es ist vorzugsweise vorgesehen, dass der Klebstoff nach Aufschieben der Magnethalterung auf die Rotorwelle zur Aushärtung mit UV-Licht bestrahlt wird. Auf diese Weise kann eine schnelle und zielgerichtete Aushärtung des Klebstoffs erreicht werden.

Es ist möglich, auf die Innenseite der Magnethalterung, einen Aktivator zur Beschleunigung der Aushärtung aufzutragen. Alternativ oder zusätzlich kann das Rotorwellenende und/oder die Magnethalterung vor dem Verbinden der Magnethalterung mit dem Rotorwellenende insbesondere mittels eines Laserverfahrens zur Verbesserung der Adhäsion bearbeitet werden.

Unter dem Begriff "Laserverfahren" ist im Rahmen der vorliegenden Erfindung vorzugsweise eine Bestrahlung einer Oberfläche mittels Laserstrahlung zu verstehen. Bei dem Laserverfahren kann es sich beispielsweise um ein Oberflächenbehandlungsverfahren handeln, bei dem die Oberfläche mittels Laserstrahlung gereinigt und/oder aufgeraut wird.

Ein weiterer, auch unabhängig realisierbarer Aspekt der vorliegenden Erfindung betrifft eine Küchenmaschine mit einem vorschlagsgemäßen Elektromotor.

Durch die Verwendung des vorschlagsgemäßen Elektromotors in einer Küchenmaschine können entsprechende Vorteile erzielt werden. Insbesondere kann die Position und/oder Rotation eines Rührers bzw. Messers der Küchenmaschine definiert erfasst und/oder gesteuert werden.

Ferner kann der vorschlagsgemäße Elektromotor aufgrund seiner kompakten, flachen bzw. einfachen Bauweise besonders platzsparend in der Küchenmaschine angeordnet werden.

Grundsätzlich kann der Elektromotor jedoch auch in anderen Vorrichtungen verwendet werden, beispielsweise einem Staubsauger oder Saugroboter.

Die vorgenannten Aspekte und Merkmale sowie die sich aus den Ansprüchen und der nachfolgenden Beschreibung ergebenden Aspekte und Merkmale der vorliegenden Erfindung können grundsätzlich unabhängig voneinander, aber auch in beliebiger Kombination realisiert werden.

Weitere Aspekte, Vorteile, Merkmale, Eigenschaften sowie vorteilhafte Weiterbildungen der vorliegenden Erfindung ergeben sich aus den Ansprüchen und der nachfolgenden Beschreibung bevorzugter Ausführungsformen anhand der Figuren. Es zeigen in schematischer, nicht maßstabsgetreuer Darstellung:
- Fig. 1: eine Schnittansicht eines vorschlagsgemäßen Elektromotors;
- Fig. 2: eine perspektivische Ansicht des Elektromotors gemäß Fig. 1;
- Fig. 3: eine perspektivische Ansicht einer Rotorwelle mit einer Magnethalterung des Elektromotors gemäß einer ersten Ausführungsform;
- Fig. 4: ein Längsschnitt der Rotorwelle gemäß Fig. 3 im Bereich der Magnethalterung;
- Fig. 5A: eine perspektivische Ansicht der Magnethalterung gemäß der ersten Ausführungsform von oben;
- Fig. 5B: eine perspektivische Ansicht der Magnethalterung gemäß der ersten Ausführungsform von unten;
- Fig. 6: eine perspektivische Ansicht einer Rotorwelle mit einer Magnethalterung des Elektromotors gemäß einer zweiten Ausführungsform;
- Fig. 7: ein Längsschnitt der Rotorwelle gemäß Fig. 6 im Bereich der Magnethalterung;
- Fig. 8A: eine perspektivische Ansicht der Magnethalterung gemäß der zweiten Ausführungsform von oben;
- Fig. 8B: eine perspektivische Ansicht der Magnethalterung gemäß der zweiten Ausführungsform von unten;
- Fig. 9: eine perspektivische Ansicht einer Rotorwelle mit einer Magnethalterung des Elektromotors gemäß einer dritten Ausführungsform;
- Fig. 10: ein Längsschnitt der Rotorwelle gemäß Fig. 9 im Bereich der Magnethalterung;
- Fig. 11A: eine perspektivische Ansicht der Magnethalterung gemäß der dritten Ausführungsform von oben;
- Fig. 11B: eine perspektivische Ansicht der Magnethalterung gemäß der dritten Ausführungsform von unten;
- Fig. 12: eine perspektivische Ansicht einer Rotorwelle mit einer Magnethalterung des Elektromotors gemäß einer vierten Ausführungsform;
- Fig. 13: ein Längsschnitt der Rotorwelle gemäß Fig. 12 im Bereich der Magnethalterung;
- Fig. 14A: eine perspektivische Ansicht der Magnethalterung gemäß der vierten Ausführungsform von oben;
- Fig. 14B: eine perspektivische Ansicht der Magnethalterung gemäß der vierten Ausführungsform von unten;
- Fig. 15: eine perspektivische Ansicht einer Rotorwelle mit einer Magnethalterung des Elektromotors gemäß einer fünften Ausführungsform;
- Fig. 16: ein Längsschnitt der Rotorwelle gemäß Fig. 15 im Bereich der Magnethalterung;
- Fig. 17A: eine perspektivische Ansicht der Magnethalterung gemäß der fünften Ausführungsform von oben;
- Fig. 17B: eine perspektivische Ansicht der Magnethalterung gemäß der fünften Ausführungsform von unten;
- Fig. 18A: eine perspektivische Ansicht der Rotorwelle, der Magnethalterung und des Magneten zu Beginn der Montage gemäß der ersten Ausführungsform;
- Fig. 18B: die Rotorwelle, die Magnethalterung und den Magneten während der Montage gemäß der ersten Ausführungsform;
- Fig. 18C: die Rotorwelle mit der durch die Montage erzeugten Klebstoffverteilung gemäß der ersten Ausführungsform;
- Fig. 19A: eine perspektivische Ansicht der Rotorwelle, der Magnethalterung und des Magneten zu Beginn der Montage gemäß der zweiten Ausführungsform;
- Fig. 19B: die Rotorwelle, die Magnethalterung und den Magneten während der Montage gemäß der zweiten Ausführungsform;
- Fig. 19C: die Rotorwelle mit der durch die Montage erzeugten Klebstoffverteilung gemäß der zweiten Ausführungsform;
- Fig. 20A: eine perspektivische Ansicht der Rotorwelle, der Magnethalterung und des Magneten zu Beginn der Montage gemäß der dritten Ausführungsform;
- Fig. 20B: die Rotorwelle, die Magnethalterung und den Magneten während der Montage gemäß der dritten Ausführungsform;
- Fig. 20C: die Rotorwelle mit der durch die Montage erzeugten Klebstoffverteilung gemäß der dritten Ausführungsform;
- Fig. 21A: eine perspektivische Ansicht der Rotorwelle, der Magnethalterung und des Magneten zu Beginn der Montage gemäß der vierten Ausführungsform;
- Fig. 21B: die Rotorwelle, die Magnethalterung und den Magneten während der Montage gemäß der vierten Ausführungsform;
- Fig. 21C: die Rotorwelle mit der durch die Montage erzeugten Klebstoffverteilung gemäß der vierten Ausführungsform;
- Fig. 22A: eine perspektivische Ansicht der Rotorwelle, der Magnethalterung und des Magneten zu Beginn der Montage gemäß der fünften Ausführungsform;
- Fig. 22B: die Rotorwelle, die Magnethalterung und den Magneten während der Montage gemäß der fünften Ausführungsform;
- Fig. 22C: die Rotorwelle mit der durch die Montage erzeugten Klebstoffverteilung gemäß der fünften Ausführungsform; und
- Fig. 23: eine Seitenansicht einer vorschlagsgemäßen Küchenmaschine.

In den teilweise nicht maßstabsgerechten, nur schematischen Figuren werden für gleiche, gleichartige oder ähnliche Bauteile und Komponenten dieselben Bezugszeichen verwendet, wobei entsprechende oder vergleichbare Eigenschaften oder Vorteile erreicht werden, auch wenn von einer Wiederholung abgesehen wird. Insbesondere gelten die nachfolgenden Ausführungen für alle Ausführungsformen, sofern nichts Gegenteiliges beschrieben ist.

Zur besseren Übersichtlichkeit sind bei gleichen Bauteilen und Komponenten innerhalb einer Figur nicht alle Bauteile/Komponenten mit einem Bezugszeichen versehen.

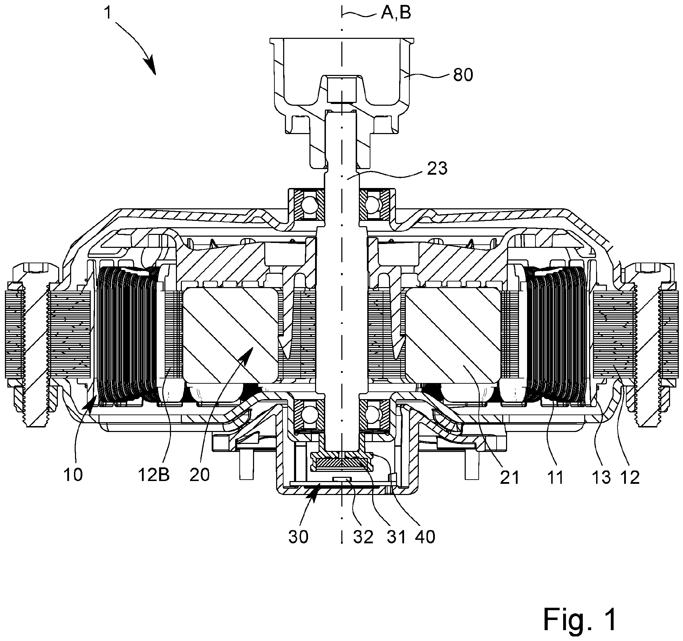

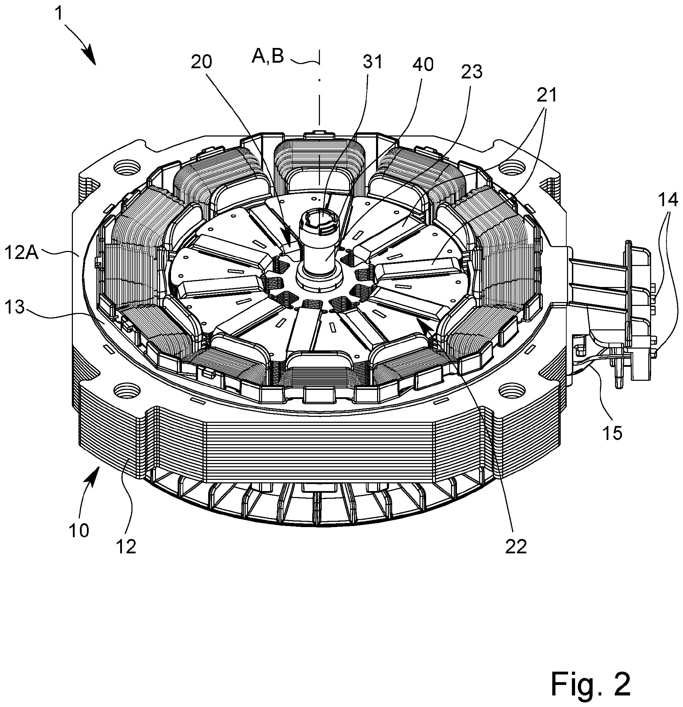

Fig. 1 zeigt einen vorschlagsgemäßen Elektromotor 1 in einer schematischen Querschnittansicht. Fig. 2 zeigt ausgewählte Komponenten des Elektromotors 1 in einer perspektivischen Darstellung.

Bei der dargestellten Ausführungsform ist der Elektromotor 1 als bürstenloser Gleichstrommotor (BLDC-Motor) ausgebildet. Es sind jedoch grundsätzlich auch andere Lösungen möglich.

Der vorschlagsgemäße Elektromotor 1 weist vorzugsweise eine große Drehzahlspreizung auf bzw. kann über einen großen Drehzahlbereich betrieben werden. Vorzugsweise ist die minimale Drehzahl kleiner als 100, 50 oder 20 U/min, insbesondere kleiner oder gleich 10 U/min, besonders bevorzugt kleiner oder gleich 1 U/min, und/oder ist die maximale Drehzahl größer als 2000, 5000 oder 8000 U/min, insbesondere größer oder gleich 10.000 U/min, besonders bevorzugt größer oder gleich 12.000 U/min, ganz besonders bevorzugt größer oder gleich 15.000 U/min.

Der Elektromotor 1 weist einen (feststehenden) Stator/Ständer 10 und einen (rotierenden/rotierbaren) Rotor/Läufer 20 auf, wobei der Rotor 20 um eine Rotationsachse A relativ zum Stator 10 drehbar ist.

Die Begriffe "axial", "radial" und "in Umfangsrichtung" beziehen sich vorzugsweise auf die Rotationsachse A, sofern nicht anders angegeben.

Beim Darstellungsbeispiel ist der Elektromotor 1 als Innenläufer-Motor ausgebildet bzw. ist der Rotor 20 zumindest teilweise innerhalb des Stators 10 angeordnet. Prinzipiell ist es jedoch auch möglich, den vorschlagsgemäßen Elektromotor 1 als Außenläufer-Motor auszubilden (nicht dargestellt).

Der Stator 10 weist mehrere, hier zwölf, Wicklungen/Spulen 11, einen Statorkern 12, einen Spulenträger 13, eine Anschlusseinrichtung 14 und/oder eine Anschlusshalterung 15 auf.

Der Statorkern 12 ist vorzugsweise zumindest im Wesentlichen ringförmig oder ringartig ausgebildet. Insbesondere weist der Statorkern 12 eine zentrale Öffnung für den Rotor 20 auf. Die Rotationsachse A entspricht vorzugsweise der Symmetrie- bzw. Ringachse des Stators 10 bzw. Statorkerns 12.

Vorzugsweise umfasst der Statorkern 12 mehrere gestapelte Elektrobleche bzw. Statorbleche 12A oder ist daraus gebildet.

Der Statorkern 12 bzw. die Statorbleche 12A bildet/bilden vorzugsweise mehrere, hier zwölf, Statorzähne bzw. Spulenabschnitte 12B, wobei jede Wicklung/Spule 11 um einen Spulenabschnitt/Statorzahn 12B gewickelt ist und/oder sich jeweils ein Spulenabschnitt/Statorzahn 12B durch eine Spule 11 hindurch erstreckt.

Vorzugsweise ist der Spulenträger 13 vorgesehen, der die Spulen 11 trägt. Der Spulenträger 13 kann einstückig ausgebildet sein, beispielsweise durch Anspritzen an den Statorkern 12. Alternativ kann der Spulenträger 13 mehrteilig ausgebildet sein. Beispielsweise kann der Spulenträger 13 aus zwei ineinandersteckbaren Teilen bestehen, in die der Statorkern 12 eingefasst ist/wird.

Über die Anschlusseinrichtung 14 können die Spulen 11 vorzugsweise mit Strom versorgt werden bzw. eine Stromquelle an den Elektromotor 1, insbesondere die Spulen 11, angeschlossen werden.

Die Anschlusseinrichtung 14 ist vorzugsweise von einer Anschlusshalterung 15 getragen, die vorzugsweise einstückig mit dem Spulenträger 13 ist bzw. einen Teil des Spulenträgers 13 bildet.

Beim Darstellungsbeispiel gemäß Fig. 1 und Fig. 2 weist der Rotor 20 vorzugsweise mehrere, hier zehn, Rotormagnete 21, einen Rotorkern 22 und eine Rotorwelle 23 auf. Die Rotormagnete 21 sind vorzugsweise im Rotorkern 22 angeordnet bzw. eingebettet. Die Rotormagnete 21 sind vorzugsweise als Permanentmagnete ausgebildet.

Die Rotorwelle 23 ist vorzugsweise aus Metall hergestellt, wodurch eine besonders stabile Ausgestaltung erreicht werden kann.

Die Rotormagnete 21 sind vorzugweise sternförmig im Rotor 20 bzw. Rotorkern 22 und/oder um die Rotorwelle 23 bzw. Rotationsachse A herum angeordnet und/oder erstrecken sich bzw. haben eine Haupt-/Längserstreckung - bezogen auf die Rotorwelle 23 bzw. Rotationsachse A - in radialer Richtung.

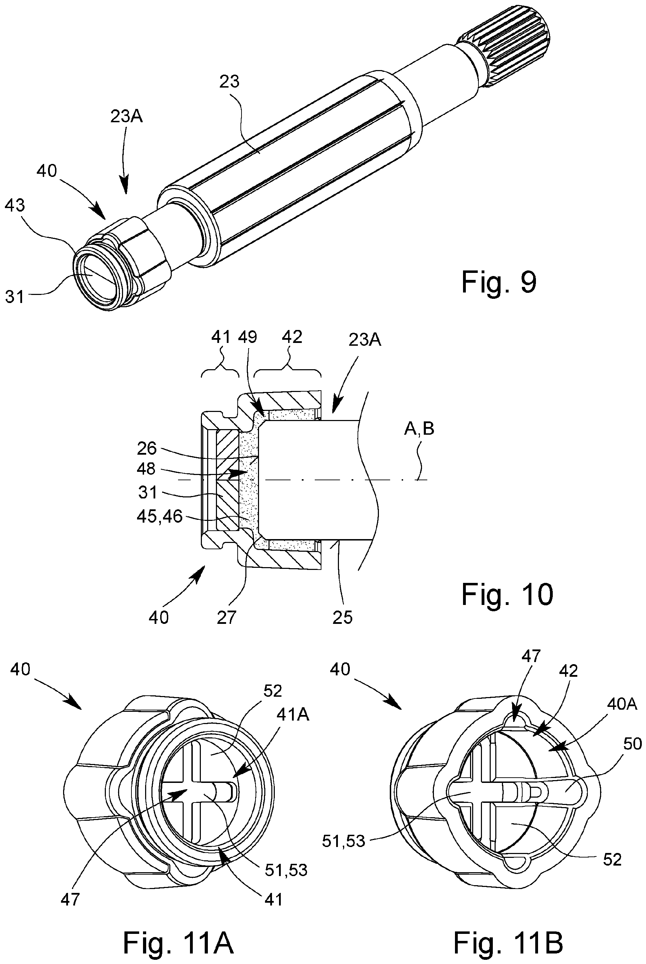

Die Rotorwelle 23 weist vorzugsweise ein Abtriebsende und ein dem Abtriebsende abgewandtes Rotorwellenende 23A auf, wie Fig. 1 zeigt. Ist der Elektromotor 1 in einer Küchenmaschine 100 eingebaut, zeigt sich das Rotorwellenende 23A vorzugsweise nach unten, wie in Bezug auf Fig. 10 nachfolgend noch beschrieben wird.

Wie Fig. 1 veranschaulicht, weist der Elektromotor 1 des Weiteren eine Sensoranordnung 30 auf. Die Sensoranordnung 30 ist dazu ausgebildet, die Rotorbewegung und/oder die Rotorposition des Elektromotors 1 sensorisch zu erfassen. Die Sensoranordnung 30 erfasst die Rotorbewegung und/oder Rotorposition vorzugsweise berührungslos und/oder verschleißfrei mittels eines Magnetfelds bzw. einer Magnetfeldänderung.

Die Sensoranordnung 30 weist insbesondere einen Magneten 31 und einen feststehendend Sensor 32 zur Erfassung des Magnetfelds des Magneten 31 auf. Über das Magnetfeld bzw. die Änderung des Magnetfelds kann die Position bzw. Bewegung des Rotors 20 ermittelt werden.

Der Sensor 32 ist vorzugsweise mit dem Stator 10 verbunden und somit ortsfest im Elektromotor 1 angeordnet.

Die Sensoranordnung 30 weist vorzugsweise eine Magnethalterung 40 zum Halten des Magneten 31 auf.

Im montierten Zustand ist die Magnethalterung 40 am axialen Ende der Rotorwelle 23, insbesondere am Rotorwellenende 23A, angeordnet, insbesondere derart dass der Magnet 31 koaxial zur Rotorwelle 23 angeordnet ist. Die Magnethalterung 40 ist vorzugsweise auf das Rotorwellenende 23A aufgesteckt oder das Rotorwellenende 23A ist in die Magnethalterung 40 eingesteckt.

Die Magnethalterung 40 erstreckt sich vorzugweise entlang einer Magnethalterungsachse B und ist vorzugsweise rotationssymmetrisch zur Magnethalterungsachse B ausgebildet. Im montierten Zustand ist die Magnethalterungsachse B vorzugsweise koaxial zur Rotationsachse A ausgebildet.

Die Magnethalterung 40 ist vorzugsweise aus Kunststoff hergestellt und/oder weist einen Kunststoff auf. Die Magnethalterung 40 kann auf diese Weise besonders kostengünstig und schnell, beispielsweise im Spritzgießprozess, hergestellt werden.

Des Weitere ist die Magnethalterung 40 vorzugsweise zumindest im Wesentlichen becherförmig ausgebildet. Die Magnethalterung 40 kann somit in vorteilhafter Weise besonders einfach auf die Rotorwelle 23 aufgeschoben bzw. aufgesteckt werden und/oder an die geometrische Form des Rotorwellenendes 23A angepasst sein.

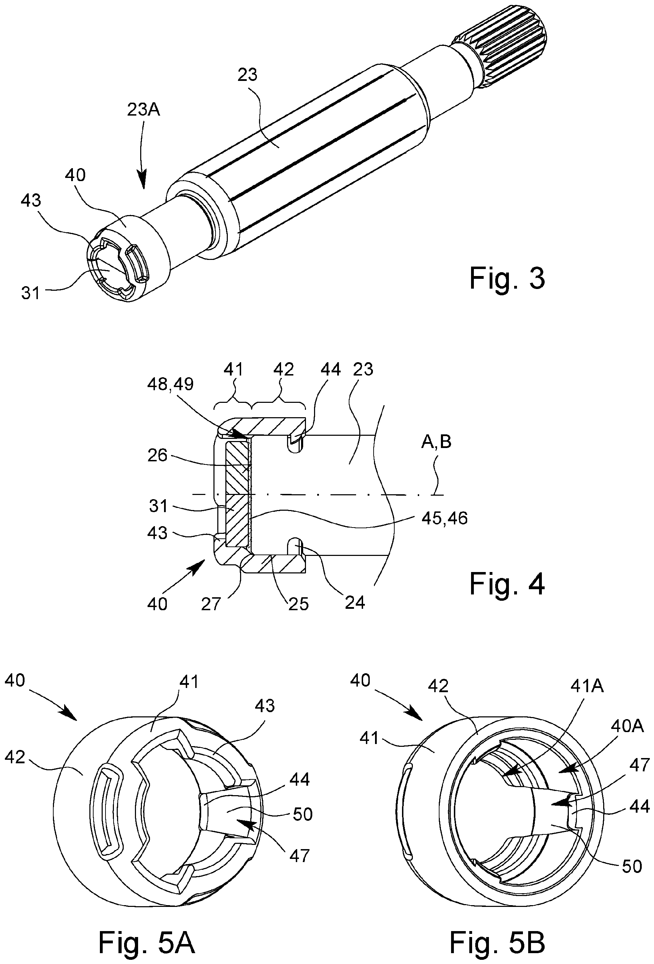

Wie Fig. 4 veranschaulicht, weist die Magnethalterung 40 vorzugsweise einen Magnetaufnahmeabschnitt 41 zur Aufnahme des Magneten 31 auf. Des Weiteren weist die Magnethalterung 40 vorzugsweise einen Verbindungsabschnitt 42 zur Verbindung mit der Rotorwelle 23 auf.

Im montierten Zustand ist der Magnetaufnahmeabschnitt 41 vorzugsweise der Rotorwelle 23 abgewandt, während der Verbindungsabschnitt 42 der Rotorwelle 23 zugewandt ist, wie Fig. 4 beispielhaft zeigt.

Insbesondere ist der Magnetaufnahmeabschnitt 41 zumindest im Wesentlichen ringförmig bzw. hohlzylinderförmig ausgebildet, so dass ein sicheres Umschließen des Magneten 31 ermöglicht wird.

Vorzugsweise ist der Magnet 31 kraftschlüssig in der Magnethalterung 40 bzw. dem Magnetaufnahmeabschnitt 41 gehalten bzw. kraftschlüssig mit der Magnethalterung 40 bzw. dem Magnetaufnahmeabschnitt 41 verbunden. Insbesondere ist zwischen dem Magneten 31 und der Magnethalterung 40 bzw. dem Magnetaufnahmeabschnitt 41 eine Presspassung ausgebildet.

Unter dem Begriff "Presspassung" ist im Rahmen der vorliegenden Erfindung allgemein zu verstehen, dass das innere Höchstmaß der aufnehmenden Komponente immer kleiner als das äußere Kleinstmaß der aufgenommenen Komponente ist. Eine Presspassung steht somit in direkter Abgrenzung zu einer Spielpassung und einer Übergangspassung.

Es ist zusätzlich oder alternativ auch möglich, dass der Magnet 31 formschlüssig mit der Magnethalterung 40 verbunden ist.

Der Verbindungsabschnitt 42 ist vorzugsweise ringförmig bzw. hohlzylinderförmig ausgebildet, um ein sicheres Umschließen des Rotorwellenendes 23A zu ermöglichen.

Es ist vorzugsweise vorgesehen, dass die Magnethalterung 40, insbesondere der Verbindungsabschnitt 42, kraftschlüssig mit der Rotorwelle 23 verbunden ist. Insbesondere ist zwischen der Magnethalterung 40 und der Rotorwelle 23 bzw. dem Rotorwellenende 23A eine Presspassung ausgebildet.

Alternativ oder zusätzlich kann die Magnethalterung 40 bzw. der Verbindungsabschnitt 42 formschlüssig mit dem Rotorwellenende 23A verbunden sein.

Insbesondere ist die Magnethalterung 40 drehfest und insbesondere axialfest mit der Rotorwelle 23 verbunden. Der Magnet 31 ist somit mittels der Magnethalterung 40 drehfest und insbesondere axialfest mit der Rotorwelle 23 verbunden.

Der Magnetaufnahmeabschnitt 41 und der Verbindungsabschnitt 42 sind vorzugsweise in axialer Richtung hintereinander angeordnet.

Der insbesondere ringförmige Verbindungsabschnitt 42 und der insbesondere ringförmige Magnetaufnahmeabschnitt 41 sind vorzugsweise koaxial zueinander angeordnet. Der Verbindungsabschnitt 42 kann einen größeren Innendurchmesser aufweisen als der Magnetaufnahmeabschnitt 41. Es ist jedoch auch möglich, dass die Durchmesser gleich sind oder der Magnetaufnahmeabschnitt 41 einen größeren Innendurchmesser als der Verbindungsabschnitt 42 aufweist.

Im Folgenden wird die Ausgestaltung der Magnethalterung 40 mit dem Magneten 31 und der Rotorwelle 23 anhand von fünf verschiedenen Ausführungsformen im Einzelnen beschrieben. Dabei wird insbesondere auf die jeweiligen Besonderheiten eingegangen, wobei gleiche bzw. ähnliche Merkmale nicht wiederholt werden.

Insbesondere können die verschiedenen Ausführungsformen jeweils ein, mehrere oder alle Merkmale der anderen Ausführungsformen aufweisen, auch wenn diese Merkmale lediglich in Zusammenhang mit einer Ausführungsform beschrieben werden.

In Fig. 3 ist die Rotorwelle 23 mit der Magnethalterung 40 und dem Magneten 31 im montierten Zustand gemäß einer ersten Ausführungsform in einer perspektivischen Ansicht gezeigt. Fig. 4 zeigt die Rotorwelle 23, die Magnethalterung 40 und den Magneten 31 in einem Längsschnitt. In Fig. 5A ist die Magnethalterung 40 in einer perspektivischen Ansicht von oben und in Fig. 5B in einer perspektivischen Ansicht von unten gezeigt.

Wie Fig. 4 in Verbindung mit Fig. 3 veranschaulicht, ist der Magnet 31 vorzugsweise als Scheibenmagnet ausgebildet. Unter dem Begriff "Scheibenmagnet" ist vorliegend ein Magnet 31 zu verstehen, dessen maximale Erstreckung im montierten Zustand in radialer Richtung größer ist als in axialer Richtung.

Der Scheibenmagnet weist hier und vorzugsweise eine kreisförmige Grundfläche auf, wobei die Grundfläche im montierten Zustand zumindest im Wesentlichen senkrecht zur Rotationsachse A ausgerichtet ist.

Wie Fig. 4 in Verbindung mit Fig. 5B zeigt, weist der Magnetaufnahmeabschnitt 41 vorzugsweise einen geringeren Durchmesser als der Verbindungsabschnitt 42 auf. Der Übergang zwischen dem Verbindungsabschnitt 42 und dem Magnetaufnahmeabschnitt 41 ist vorzugsweise stetig ausgebildet.

Die Magnethalterung 40 weist vorzugsweise einen innenseitigen Vorsprung 43 zum Halten des Magneten 31 auf. Wie Fig. 4 zeigt, kann der Vorsprung 43 im Magnetaufnahmeabschnitt 41 angeordnet sein. Insbesondere ist der Vorsprung 43 auf einer Innenseite 41A des Magnetaufnahmeabschnitts 41 angeordnet. Besonders bevorzugt ist der Vorsprung 43 an dem der Rotorwelle 23 abgewandten axialen Ende des Magnetaufnahmeabschnitts 41 ausgebildet.

Der innenseitige Vorsprung 43 dient vorzugsweise als Anschlag für den Magneten 31. Durch den Vorsprung 43 ist der Magnet 31 vorzugsweise in eine der beiden axialen Richtungen bezogen auf die Magnethalterungsachse B formschlüssig gehalten. In der in Fig. 4 gezeigten Ausführungsform begrenzt bzw. unterbindet der Vorsprung 43 eine Bewegung des Magneten 31 in der der Rotorwelle 23 abgewandten, axialen Richtung.

Wie Fig. 5A zeigt, weist die Magnethalterung 40 vorzugsweise drei Vorsprünge 43 auf. Die Vorsprünge 43 sind vorzugsweise in Umfangsrichtung gleichverteilt bzw. äquidistant zueinander angeordnet. Es ist jedoch auch möglich, lediglich einen Vorsprung 43, zwei Vorsprünge 43 oder mehr als drei Vorsprünge 43 vorzusehen.

Der Magnet 31 ist somit vorzugsweise in axialer Richtung kraftschlüssig und in radialer Richtung formschlüssig in der Magnethalterung 40 gehalten bzw. fixiert.

In der in Fig. 3 bis Fig. 5B gezeigten Ausführungsform weist die Magnethalterung 40 vorzugsweise wenigstens ein elastisch auslenkbares Halteelement 44 auf, das im montierten Zustand formschlüssig mit der Rotorwelle 23 verbunden ist. Insbesondere steht das elastisch auslenkbare Halteelement 44 mit einer Halteausformung 24 am Rotorwellenende 23A in formschlüssigen Eingriff, wie Fig. 4 zeigt.

Das Halteelement 44 ist vorzugsweise zumindest im Wesentlichen hakenartig ausgestaltet oder weist einen hakenartig ausgebildeten Abschnitt auf, der radial nach innen gerichtet ist.

Das Halteelement 44 ist vorzugsweise im Verbindungsabschnitt 42 angeordnet. Wie Fig. 4 zeigt, ist das Halteelement 44 insbesondere am axialen Ende des Aufnahmeabschnitts 42 angeordnet, welches der Rotorwelle 23 zugewandt bzw. dem Magnetaufnahmeabschnitt 41 abgewandt ist.

In der ersten Ausführungsform weist die Magnethalterung 40 vorzugsweise drei Halteelemente 44 auf. Es ist jedoch auch möglich, dass die Magnethalterung 40 weniger oder mehr als drei Halteelemente 44 aufweist.

Es ist auch eine umgekehrte Ausbildung denkbar, bei der das Halteelement 44, insbesondere der Verbindungsabschnitt 42 eine Vertiefung bzw. Aussparung und das Rotorwellenende 23A einen Haltevorsprung aufweist, wobei der Haltevorsprung mit der Vertiefung bzw. Aussparung in formschlüssigem Eingriff steht.

Die Halteausformung 24 ist in der in Fig. 3 bis Fig. 5B gezeigten und insoweit bevorzugten Ausführungsform als zumindest im Wesentlichen umlaufende Haltenut in der Rotorwelle 23 bzw. dem Rotorwellenende 23A, insbesondere einer radialen Außenseite 25 des Rotorwellenendes 23A, ausgebildet.

Die Magnethalterung 40 ist mittels des Eingriffs zwischen dem Halteelement 44 und der Halteausformung 24 formschlüssig an der Rotorwelle 23 gehalten. Diese Verbindung verhindert insbesondere das Abziehen der Magnethalterung 40 von dem Rotorwellenende 23A in axialer Richtung.

In der ersten Ausführungsform ist somit vorgesehen, dass zusätzlich zur kraftschlüssigen Verbindung zwischen der Magnethalterung 40 und der Rotorwelle 23, die Magnethalterung 40 dann vorzugsweise auch formschlüssig mit der Rotorwelle 23 verbunden ist.

Die in den Figuren 3 bis 5B gezeigte erste Ausführungsform weist die Besonderheit auf, dass der Magnet 31 vorzugsweise zusätzlich mittels einer Klebverbindung 45 mit dem Rotorwellenende 23A verbunden ist. Der Magnet 31 ist dann in besonders zuverlässiger Weise mit dem Rotorwellenende 23A drehfest verbunden.

Wie Fig. 4 zeigt, ist die axiale Stirnseite 26 der Rotorwelle 23 vorzugsweise mit der dem Rotorwellenende 23A zugewandten Seite des Magneten 31 verklebt. Der Magnet 31 ist dann vorzugsweise stoffschlüssig mit der Rotorwelle 23 verbunden, insbesondere in axialer und radialer Richtung.

Alternativ oder zusätzlich kann die Magnethalterung 40 mittels der Klebverbindung 45 mit dem Rotorwellenende 23A verklebt sein. Durch die Klebverbindung 45 kann eine drehfeste Verbindung zwischen der Magnethalterung 40 und dem Rotorwellenende 23A sichergestellt werden.

Die Magnethalterung 40 ist vorzugsweise transparent für UV-Licht ausgebildet, insbesondere aus einem amorphen Thermoplast. Der die Klebverbindung 45 ausbildende Klebstoff 46 ist vorzugsweise als UV-Licht-härtender Klebstoff 46 ausgebildet. Der UV-Licht-härtende Klebstoff 46 kann beispielsweise auf Acrylat- und/oder Epoxidbasis ausgebildet sein.

UV-Licht-härtende Klebstoffe weisen eine gute Verarbeitbarkeit auf. So können UV-Licht-härtende Klebstoffe in einfacher Weise unter Abschirmung von UV-Licht verarbeitet und aufgetragen werden. Ist der UV-Licht-härtende Klebstoff richtig aufgetragen, kann dieser mit UV-Licht bestrahlt werden, wodurch ein schnelles und besonders gezieltes Aushärten realisiert werden kann.

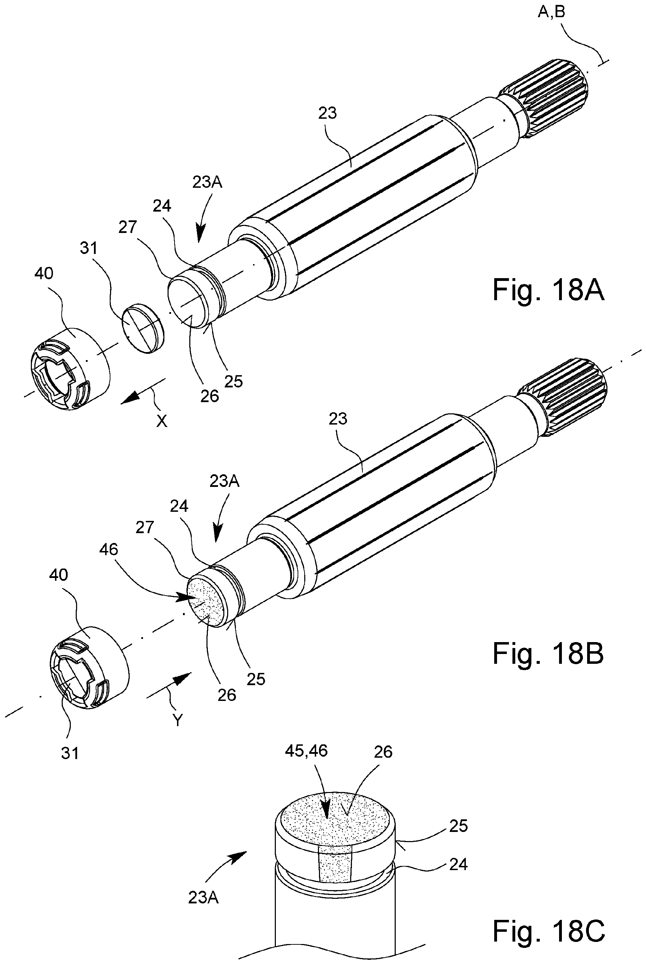

Durch die für UV-Licht-transparente Ausgestaltung der Magnethalterung 40 kann die Aushärtung des Klebstoffs 46 durch Bestrahlen mittels UV-Licht erfolgen, wenn die Magnethalterung 40 auf das Rotorwellenende 23A aufgesetzt ist, wie in Bezug auf das Montageverfahren in Verbindung mit den Figuren 18A bis 22C im Einzelnen noch beschrieben wird. Die Magnethalterung 40 ist dann vorzugsweise aufgrund der form- und/oder kraftschlüssigen Verbindung mit dem Rotorwellenende 23A lagegenau an der Rotorwelle 23 fixiert, während die Klebverbindung 45 aushärten kann.

Es ist alternativ oder zusätzlich auch möglich, einen anaerob-härtenden Klebstoff 46 zu verwenden.

Vorzugsweise wird ein Klebstoff 46 auf Acrylatbasis verwendet, der sowohl UV-Lichthärtend als auch anaerob-härtend ist. Ein solcher Klebstoff 46 wird aufgrund der beiden möglichen Aushärtungsmechanismen als dualhärtend bezeichnet. Auf diese Weise kann auch Klebstoff 46, der durch den Magneten 31 von UV-Licht teilweise oder vollständig abgeschirmt wird, anaerob aushärten.

Der Klebstoff 46 kann eine fluoreszierende Komponente aufweisen. Während der Bestrahlung mit UV-Licht kann mittels der fluoreszierenden Komponente die Ausbildung der Klebverbindung 45 insbesondere optisch überwacht werden. Durch die Überwachung können fehlerhaft ausgebildete Klebverbindungen 45 gezielt erkannt und/oder aussortiert werden, wodurch die Prozesssicherheit erhöht werden kann.

Die Magnethalterung 40 ist vorzugsweise dazu ausgebildet, während der Montage den Klebstoff 46 insbesondere gleichmäßig zu verteilen und zwar in radialer und/oder axialer Richtung. Zu diesem Zweck kann die Magnethalterung 40 ein Nutsystem 47 zum Verteilen von Klebstoff 46 aufweisen. Durch das Nutsystem 47 kann der Klebstoff 46 bei der Montage, insbesondere beim Aufschieben der Magnethalterung 40 auf das Rotorwellenende 23A, gleichmäßig verteilt und überschüssiger Klebstoff 46 abgeführt werden, wie nachfolgend noch in Bezug auf die Montage im Einzelnen beschrieben wird.

Vorzugweise bildet das Nutsystem 47 im montierten Zustand zusammen mit einer radialen Außenseite 25 und/oder einer axialen Stirnseite 26 des Rotorwellenendes 23A und/oder dem Magneten 31 ein Verteilkanalsystem 48 für Klebstoff 46 mit wenigstens einem Verteilkanal 49.

Wie Fig. 5A und Fig. 5B veranschaulichen, weist die Magnethalterung 40 vorzugsweise wenigstens eine axiale Nut 50 als Bestandteil des Nutsystems 47 auf. Die axiale Nut 50 kann im Magnetaufnahmeabschnitt 41 und/oder im Verbindungsabschnitt 42 ausgebildet sein. Die axiale Nut 50 kann sich über die gesamte Höhe in axialer Richtung der Magnethalterung 40 erstrecken. Alternativ ist es auch möglich, dass sich die axiale Nut 50 lediglich im Magnetaufnahmeabschnitt 41 oder im Verbindungsabschnitt 42 oder lediglich über einen Bereich des Magnetaufnahmeabschnitts 41 und/oder des Verbindungsabschnitts 42 erstreckt.

In der in Fig. 3 bis Fig. 5B gezeigten Ausführungsform erstreckt sich die axiale Nut 50 ausgehend von dem Halteelement 44 in axialer Richtung über den Verbindungsabschnitt 42 bis zum Magnetaufnahmeabschnitt 41 und/oder bis zum der Rotorwelle 23 abgewandten axialen Ende der Magnethalterung 40. Es ist auch möglich, dass die Nut 50 in Umfangsrichtung zum Halteelement 44 versetzt angeordnet ist.

Das Nutsystem 47 kann insbesondere sternförmig ausgebildet sein. Der Begriff "sternförmig" ist vorliegend auf eine senkrecht zur Magnethalterungsachse B ausgerichtete Ebene bezogen. Wie in Fig. 5B erkennbar ist, weist der Nutboden die am weitesten von der Magnethalterungsachse B in radialer Richtung entfernte Innenfläche auf. Durch die Nuten 50 entsteht somit entlang der senkrecht zur Magnethalterungsachse B verlaufenden Ebene eine Sternform, wobei die Nuten 50 Arme des Sterns ausbilden.

Wie Fig. 5B verdeutlicht, weist die Magnethalterung 40 vorzugsweise in Umfangsrichtung alternierende Abschnitte auf, wobei erste Abschnitte - die Nuten 50 - mit der Rotorwelle 23 verklebt und zweite Abschnitte - die Bereiche zwischen den Nuten 50 - kraftschlüssig mit der Rotorwelle 23 verbunden sein können.

Die Nuten 50 können miteinander verbunden sein, insbesondere durch eine oder mehrere Verbindungsnuten. Die Verbindungsnut kann zwei oder mehrere axiale Nuten 50 miteinander verbinden.

Die Verbindungsnut ist vorzugsweise auf einer, insbesondere radialen, Innenfläche der Magnethalterung 40 ausgebildet. Die Verbindungsnut kann in Umfangsrichtung vollständig umlaufend ausgebildet sein. Die Verbindungsnut verbindet somit insbesondere alle axialen Nuten 50 miteinander.

Die Verbindungsnut ist vorzugsweise Bestandteil des Nutsystems 47. Die Verbindungsnut bildet vorzugsweise mit der axialen Stirnseite 26 und/oder der radialen Außenseite 25 einen Verteilkanal 49 für Klebstoff 46. Die Verbindungsnut ist somit insbesondere Bestandteil des Verteilkanalsystem 48.

Im Bereich der Halteelemente 44 weist die Magnethalterung 40 insbesondere alternierende Abschnitte in Umfangsrichtung auf, wobei erste Abschnitte - die Halteelemente 44 - formschlüssig und zweite Abschnitte - die Bereiche zwischen den Halteelementen 44 - kraftschlüssig formschlüssig mit der Rotorwelle 23 verbunden sind.

Auf die Stirnseite 26 aufgebrachter Klebstoff 46 kann bei der Montage zwischen dem Magneten 31 und der axialen Stirnseite 26 radial nach außen zu den axialen Nuten 50 zur weiteren Verteilung des Klebstoffs 46 geleitet werden, wie nachfolgend noch in Bezug auf das Montageverfahren im Einzelnen beschrieben wird. Um eine gleichmäßige Verteilung des Klebstoffs 46 in die axialen Nuten 50 zu erreichen, kann das Rotorwellenende 23A im Übergangsbereich zwischen der axialen Stirnseite 26 und der radialen Außenseite 25 eine Fase 27 aufweisen, die zusammen mit der Magnethalterung 40 einen Verteilkanal 49 des Verteilkanalsystems 48 ausbildet.

Mittels der Nuten 50 kann der Klebstoff 46 in axialer Richtung abgeführt bzw. verteilt werden. Klebstoff 46, der in Richtung der Rotorwelle 23 geleitet wird, kann eine Verkleben der Magnethalterung 40, insbesondere des Verbindungsabschnitts 42, mit dem Rotorwellenende 23A bewirken. Darüber hinaus kann Klebstoff 46 in Richtung des Vorsprungs 43 abgeführt werden und vorzugsweise ein Verkleben zwischen der radialen Außenfläche des Magneten 31 mit der radialen Innenseite 41A des Magnetaufnahmeabschnitts 41 bewirken.

Nachfolgend wird eine zweite Ausführungsform beschrieben, wobei lediglich auf die Unterschiede zur ersten Ausführungsform eingegangen wird.

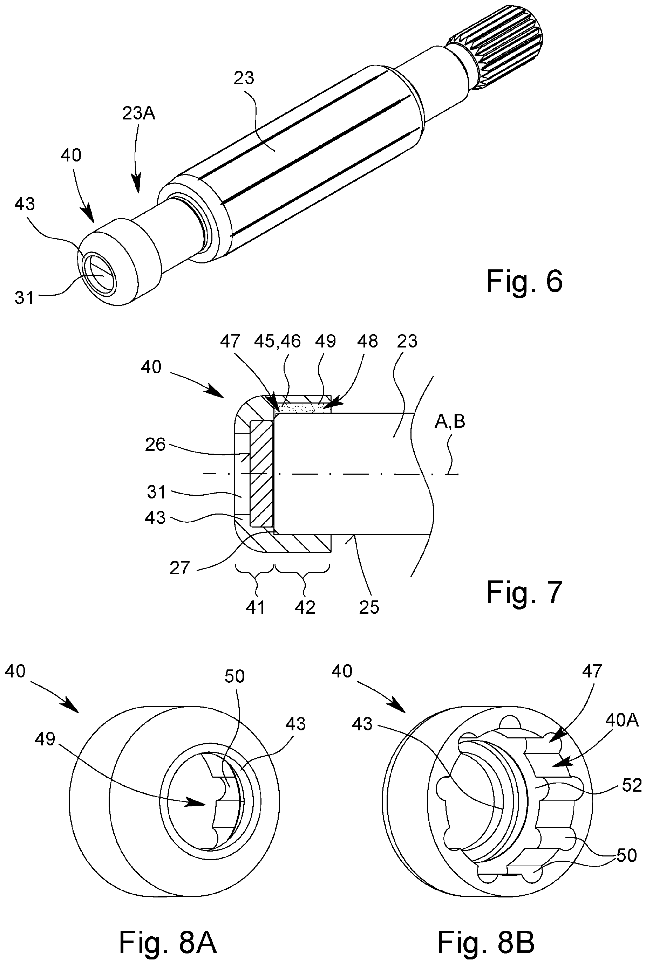

In Fig. 6 ist die Rotorwelle 23 mit der Magnethalterung 40 und dem Magneten 31 im montierten Zustand gemäß der zweite Ausführungsform in einer perspektivischen Ansicht gezeigt. Fig. 7 zeigt die Rotorwelle 23, die Magnethalterung 40 und den Magneten 31 in einem Längsschnitt. In Fig. 8A ist die Magnethalterung 40 in einer perspektivischen Ansicht von oben und in Fig. 8B in einer perspektivischen Ansicht von unten gezeigt.

Die zweite Ausführungsform weist gegenüber der ersten Ausführungsform einen Boden 52 als Anschlag für die Rotorwelle 23 auf. Zusätzlich ist der Vorsprung 43 in Umfangsrichtung vollständig umlaufend ausgebildet und die Magnethalterung 40 weist kein Halteelement 44 auf.

Der Hauptunterschied zur ersten Ausführungsform besteht darin, dass die Magnethalterung 40 gemäß der zweiten Ausführungsform vorzugsweise den Boden 52 aufweist, wie insbesondere Fig. 8B zeigt. Der Boden 52 kann insbesondere einen Anschlag für die Rotorwelle 23 bilden. Wie Fig. 7 zeigt, liegt das Rotorwellenende 23A, insbesondere die axiale Stirnseite 26, im montierten Zustand gegen den Boden 52 an. Der Begriff "anliegen" ist im Rahmen der vorliegenden Erfindung vorzugsweise breit zu verstehen und umfasst unmittelbares und mittelbares Anliegen.

Der Boden 52 ist in der zweiten Ausführungsform vorzugsweise im Magnetaufnahmeabschnitt 41 bzw. als Bestandteil des Magnetaufnahmeabschnitts 41 ausgebildet. Der Boden 52 kann einen stufenartigen Übergang zwischen dem Verbindungsabschnitt 42 und dem Magnetaufnahmeabschnitt 41 ausbilden, wie Fig. 7 zeigt.

Wie Fig. 8B zeigt, weist die Magnethalterung 40 gemäß der zweiten Ausführungsform vorzugsweise mehr als drei, insbesondere genau neun, axiale Nuten 50 auf. Die Nuten 50 sind vorzugsweise in Umfangsrichtung gleichverteilt und/oder äquidistant zueinander angeordnet. Es ist jedoch auch möglich drei oder weniger als drei Nuten 50 vorzusehen.

Die axialen Nuten 50 erstrecken sich vorzugsweise über den gesamten Verbindungsabschnitt 42. Die Nuten 50 erstrecken sich insbesondere ausgehend vom Boden 52 bis zum axialen Ende der Magnethalterung 40, welches im montierten Zustand der Rotorwelle 23 zugewandt bzw. dem Magnetaufnahmeabschnitt 41 abgewandt ist.

Der Klebstoff 46 kann bei der Montage zwischen dem Magneten 31 und der axialen Stirnseite 26 in radialer Richtung verteilt und zu den Nuten 50 geleitet werden. Über die Nuten 50 kann der Klebstoff 46 in axialer Richtung entlang der radialen Außenseite 25 des Rotorwellenendes 23A geführt werden. Auf diese Weise kann die Klebverbindung 45 zwischen dem Magneten 31 und der axialen Stirnseite 26 sowie zwischen dem Verbindungsabschnitt 42 und der Rotorwelle 23 ausgebildet werden.

Die Magnethalterung 40 weist, wie aus Fig. 7 und Fig. 8A hervorgeht, vorzugsweise genau einen Vorsprung 43 auf. Der Vorsprung 43 ist insbesondere am axialen dem Verbindungsabschnitt 42 abgewandten Ende des Magnetaufnahmeabschnitts 41 angeordnet. Der Vorsprung 43 ist vorzugsweise in Umfangsrichtung vollständig umlaufend ausgebildet, wodurch ein besonders gleichmäßiges Halten des Magneten 31 in axialer Richtung realisiert werden kann.

Wie Fig. 6 bis Fig. 8B zeigen, weist die Magnethalterung 40 gemäß der zweiten Ausführungsform vorzugsweise kein Halteelement 44 und die Rotorwelle 23 keine Halteausformung 24 auf. Im montierten Zustand ist die Magnethalterung 40 vorzugsweise ausschließlich kraft- und stoffschlüssig mit dem Rotorwellenende 23A verbunden. Es ist jedoch auch möglich, dass die zweite Ausführungsform ein Halteelement 44 und die Rotorwelle eine Halteausformung 24 aufweist.

Nachfolgend wird eine dritte Ausführungsform beschrieben, wobei lediglich auf die Unterschiede zur zweiten Ausführungsform eingegangen wird.

In Fig. 9 ist die Rotorwelle 23 mit der Magnethalterung 40 und dem Magneten 31 im montierten Zustand gemäß der dritten Ausführungsform in einer perspektivischen Ansicht gezeigt. Fig. 10 zeigt die Rotorwelle 23, die Magnethalterung 40 und den Magneten 31 in einem Längsschnitt. In Fig. 11A ist die Magnethalterung 40 in einer perspektivischen Ansicht von oben und in Fig. 11B in einer perspektivischen Ansicht von unten gezeigt.

Die dritte Ausführungsform weist gegenüber der zweiten Ausführungsform wenigstens eine radiale Nut 51 auf. Zusätzlich ist der Boden 52 zwischen dem Magnetaufnahmeabschnitt 41 und dem Verbindungsabschnitt 42 angeordnet, wobei eine stoffschlüssige Verbindung zwischen dem Magneten 31 und der Stirnseite 26 dadurch geschaffen wird, dass die radiale Nut 51 den Boden 52 vollständig durchdringt, wie nachfolgend im Einzelnen erläutert wird.

Der Hauptunterschied der dritten Ausführungsform gegenüber der zweiten Ausführungsform besteht vorzugsweise darin, dass die Magnethalterung 40 zusätzlich wenigstens eine radiale Nut 51 zum radialen Verteilen von Klebstoff 46 aufweist.

Die radiale Nut 51 ist vorzugsweise im Boden 52 oder als Bestandteil des Bodens 52 ausgebildet. Die radiale Nut 51 ist insbesondere auf einer der Rotorwelle 23 im montierten Zustand zugewandten Flachseite ausgebildet.

Die radiale Nut 51 durchdringt den Boden 52 vorzugsweise vollständig in axialer Richtung, wie Fig. 11A und 11B veranschaulichen. Die radiale Nut 51 kann auf diese Weise als Durchgangsöffnung 53 ausgebildet sein.

Der Boden 52 ist insbesondere zwischen dem Magnetaufnahmeabschnitt 41 und dem Verbindungsabschnitt 42 angeordnet.

Durch die Anordnung des Bodens 52 zwischen dem Magnetaufnahmeabschnitt 41 und dem Verbindungsabschnitt 42 ergibt sich, dass der Magnet 31 im montierten Zustand gegen eine der Rotorwelle 23 abgewandten Flachseite des Bodens 52 anliegt. Der Boden 52 liegt vorzugsweise im montierten Zustand mit der dem Magneten 31 abgewandten Flachseite gegen die Stirnseite 26 des Rotorwellenendes 23A an. Der Magnet 31 ist dann über den Boden 52 beabstandet von der Rotorwelle 23 angeordnet.

In der dritten Ausführungsform weist die Magnethalterung 40 vorzugsweise vier radiale Nuten 51 auf. Die radialen Nuten 51 bzw. die radiale Nut 51 können/kann als kreuzförmige Nut 51 ausgebildet sein, wie Fig. 11A und Fig. 11B zeigen.

Die Magnethalterung 40 bzw. der Verbindungsabschnitt 42 weist gemäß der dritten Ausführungsform vorzugsweise vier axiale Nuten 50 auf. Wie Fig. 11B zeigt, gehen die radialen Nuten 51 vorzugsweise in die axialen Nuten 50 über. Insbesondere ist jede axiale Nut 50 mit einer radialen Nut 51 fluidisch verbunden. Die axialen und radial Nuten 50, 51 sind dann insbesondere unmittelbar miteinander verbunden.

Durch die radialen Nuten 51 kann der Klebstoff 46 bei der Montage in radialer Richtung verteilt werden. Durch die radialen Nuten 51 kann der Klebstoff 46 gezielt in die axialen Nuten 50 geleitet werden, um den Klebstoff 46 auch in axialer Richtung zu verteilen. Auf diese Weise kann die Magnethalterung 40 mit der Rotorwelle 23 verklebt werden.

Mithilfe der sich durch den Boden 52 erstreckenden radialen Nuten 51 kann der Klebstoff 46 bei der Montage auch in axialer Richtung zum Magneten 31 geleitetet werden. Auf diese Weise kann der Magnet 31 mit der Stirnseite 26 der Rotorwelle 23 verklebt werden, wie in Bezug auf das Montageverfahren noch im Einzelnen erläutert wird.

Die radialen Nuten 51 und/oder die axialen Nuten 50 können miteinander verbunden sein, insbesondere durch die eine oder die mehreren Verbindungsnuten. Die Verbindungsnut kann zwei oder mehrere Nuten 50 oder 51 miteinander verbinden.

Die Verbindungsnut ist vorzugsweise auf einer, insbesondere radialen, Innenfläche und/oder im Boden 52 ausgebildet. Die Verbindungsnut kann in Umfangsrichtung vollständig umlaufend ausgebildet sein. Die Verbindungsnut kann dann alle axialen Nuten 50 und/oder alle radialen Nuten 51 miteinander verbinden.

Die Magnethalterung 40 gemäß der dritten Ausführungsform weist vorzugsweise keinen Vorsprung 43 auf.

Wie Fig. 10 zeigt, weist der Magnetaufnahmeabschnitt 41 einen geringeren Außendurchmesser als der Verbindungsabschnitt 42 auf. Der Übergang kann vorzugsweise kontinuierlich oder sprunghaft ausgebildet sein.

Nachfolgend wird eine vierte Ausführungsform beschrieben, wobei lediglich auf die Unterschiede zur dritten Ausführungsform eingegangen wird.

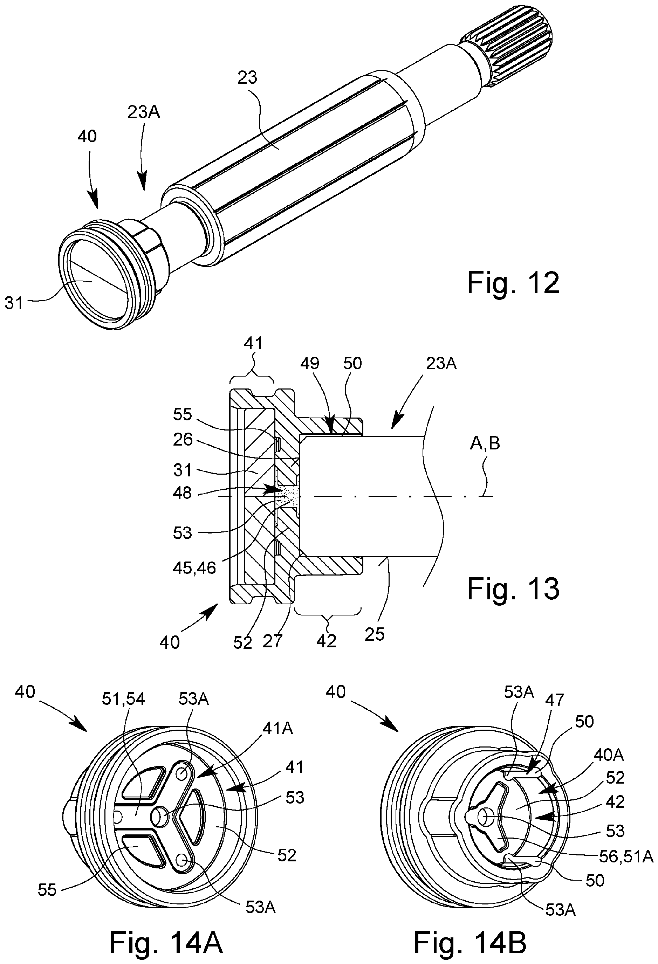

In Fig. 12 ist die Rotorwelle 23 mit der Magnethalterung 40 und dem Magneten 31 im montierten Zustand gemäß der dritten Ausführungsform in einer perspektivischen Ansicht gezeigt. Fig. 13 zeigt die Rotorwelle 23, die Magnethalterung 40 und den Magneten 31 in einem Längsschnitt. In Fig. 14A ist die Magnethalterung 40 in einer perspektivischen Ansicht von oben und in Fig. 14B in einer perspektivischen Ansicht von unten gezeigt.

Die vierte Ausführungsform unterscheidet sich zur dritten Ausführungsform dahingehend, dass die radialen Nuten 51 auf der dem Magneten 31 zugewandten Flachseite des Bodens 52 ausgebildet sind. Die radialen Nuten 51 sind mit den axialen Nuten 50 durch eine den Boden 52 durchdringende Durchgangsöffnung 53A fluidisch verbunden, wie nachfolgend noch erläutert wird.

Der Hauptunterschied zur dritten Ausführungsform ist darin zu sehen, dass die radiale Nut 51 auf der dem Rotorwellenende 23A abgewandten Flachseite des Bodens 52 ausgebildet ist, wie Fig 14A zeigt. Die radiale Nut 51 ist insbesondere als Vertiefung 54 im Boden 52 ausgebildet.

Wie Fig. 14A des Weiteren zeigt, weist die vierte Ausführungsform vorzugsweise genau drei radiale Nuten 51 auf. Die radialen Nuten 51 erstrecken sich vorzugsweise sternförmig ausgehend von der Magnethalterungsachse B. Es ist alternativ auch möglich, weniger oder mehr als drei radiale Nuten 51 vorzusehen.

Wie Fig. 13 in Verbindung mit Fig. 14A und Fig. 14B zeigt, weist die der Boden 52 vorzugsweise eine zentrale Durchgangsöffnung 53 auf, die sich insbesondere in axialer Richtung vollständig durch den Boden 52 hindurch erstreckt. Unter dem Begriff "zentral" ist vorliegend vorzugsweise eine koaxiale Ausrichtung zur Magnethalterungsachse B zu verstehen.

Über die zentrale Durchgangsöffnung 53 ist die radiale Nut 51 vorzugsweise mit der dem Rotorwellenende 23A zugewandten Flachseite des Bodens 52 verbunden, wie aus der Zusammenschau der Fig. 14A und Fig. 14B hervorgeht.

Der Boden 52 weist vorzugsweise wenigstens eine weitere Durchgangsöffnung 53A auf, die den Boden 52 vollständig, insbesondere in axialer Richtung, durchdringt. Die weitere Durchgangsöffnung 53A ist vorzugsweise radial beabstandet zur zentralen Durchgangsöffnung 53 angeordnet. Die weitere Durchgangsöffnung 53A ist insbesondere innerhalb der radialen Nut 51 bzw. Vertiefung 54 angeordnet bzw. ausgebildet. Insbesondere kann die weitere Durchgangsöffnung 53A in einem radial außen liegenden Bereich der radialen Nut 51 bzw. der Vertiefung 54 angeordnet sein.

Über die radiale Nut 51 ist die zentrale Durchgangsöffnung 53 vorzugsweise mit der weiteren Durchgangsöffnung 53A fluidisch verbunden, wie Fig. 14A zeigt. Es kann somit Klebstoff 46 über die radiale Nut 51 von der zentralen Durchgangsöffnung 53 zu der weiteren Durchgangsöffnungen 53A und umgekehrt geleitet werden, wenn der Magnet 31 gegen den Boden 52 anliegt. Dies wird in Bezug auf das Montageverfahren nachfolgend noch im Einzelnen erläutert.

Wie Fig. 14B veranschaulicht, geht die weiter Durchgangsöffnung 53A vorzugsweise in die axiale Nut 50 über bzw. ist mit der axialen Nut 50 fluidisch verbunden.

Vorzugsweise entspricht die Anzahl der weiteren Durchgangsöffnungen 53A der Anzahl der radialen Nuten 51 bzw. der Anzahl der Arme der sternförmigen Vertiefung 54.

Wie Fig. 14A im Einzelnen zeigt, weist der Boden 52 vorzugsweise genau drei weitere Durchgangsöffnungen 53A und drei radiale Nuten 51 auf, insbesondere wobei jeweils eine weitere Durchgangsöffnung 53A im radialen außenliegenden Bereich einer radialen Nut 51 angeordnet ist.

Wie Fig. 14B veranschaulicht, geht jede weitere Durchgangsöffnung 53A in jeweils eine axiale Nut 50 über. Anders ausgedrückt ist jede weitere Durchgangsöffnung 53A mit jeweils einer axialen Nut 50 verbunden.

Der Boden 52 weist vorzugsweise auf der dem Magneten 31 im montierten Zustand zugewandten Flachseite wenigstens eine Aufnahmevertiefung 55 zur Aufnahme von überschüssigem Klebstoff 46 auf. Wie in Bezug auf das Montageverfahren noch im Einzelnen beschrieben wird, kann die Aufnahmevertiefung 55 überschüssigen Klebstoff 46 zwischen dem Magneten 31 und der dem Magneten 31 zugewandten Flachseite des Bodens 52 aufnehmen.

Der Boden 52 weist des Weiteren vorzugsweise auf der dem Rotorwellenende 23A zugewandten Flachseite eine zweite Vertiefung 56 bzw. zweite radiale Nut 51A zum radialen Verteilen von Klebstoff 46 auf, wie Fig. 14B zeigt. Mithilfe der zweiten Vertiefung 56 bzw. zweite radialen Nut 51A kann Klebstoff 46 zwischen dem Boden 52 und der Stirnseite 26 der Rotorwelle 23 radial verteilt werden, um eine Klebfläche zwischen dem Boden 52 und der Stirnseite 26 zu schaffen und/oder zu vergrößern.

Die zweite Vertiefung 56 ist vorzugsweise radial um die zentrale Durchgangsöffnung 53 angeordnet bzw. ausgebildet. Wie Fig. 14B zeigt, ist die zweite Vertiefung 56 vorzugsweise sternförmig ausgebildet und weist insbesondere drei Arme auf. Es ist jedoch auch möglich mehr oder weniger als drei Arme vorzugehen. Alternativ kann die Vertiefung 56 auch rund oder polygonförmig ausgebildet sein.

Wie Fig. 14B des Weiteren zeigt, erstrecken sich die drei Arme der zweiten Vertiefung 56 jeweils ausgehend von der zentralen Durchgangsöffnung 53 radialer in Richtung zu jeweils einer axialen Nut 50, wobei insbesondere keine Verbindung zwischen der zweiten Vertiefung 56 bzw. zweiten radialen Nut 51a und der axialen Nut 50 besteht.

Vorzugsweise können die radialen Nuten 51 und die zweiten radialen Nuten 51A in axialer Richtung übereinander angeordnet sein, so dass die radialen Nuten 51 zu den zweiten radialen Nuten 51A in Umfangsrichtung nicht versetzt zueinander angeordnet sind. Es ist jedoch auch möglich, dass die radialen Nuten 51 und die zweiten radialen Nuten 51A in Umfangsrichtung versetzt zueinander angeordnet sind.

Wie Fig. 13 zeigt und oben bereits angesprochen worden ist, ist der Magnet 31 im montierten Zustand durch den Boden 52 von der Rotorwelle 23 beabstandet. Der Magnet 31 ist vorzugsweise über die radialen Nuten 51 mit dem Boden 52 unmittelbar verklebt. Mithilfe der radialen Nuten 51 kann eine Klebfläche zwischen dem Boden 52 und dem Magneten 31 geschaffen und/oder vergrößert werden, wodurch grö-ßere Kräfte übertragen werden können. Des Weiteren ist der Magnet 31 vorzugsweise über die zentrale Durchgangsöffnung 53 mit der Stirnseite 26 verklebt.

Die Magnethalterung 40 bzw. der Boden 52 ist vorzugsweise über die zweite Vertiefung 56 bzw. die zweite radiale Nut 51A mit der Stirnseite 26 der Rotorwelle 23 verklebt. Durch die zweite Vertiefung 56 wird eine Klebfläche zwischen dem Boden 52 und der axialen Stirnseite 26 der Rotorwelle 23 erzeugt und/oder vergrößert, um im montierten Zustand größere Kräfte zwischen der Magnethalterung 40 und dem Rotorwellenende 23 übertragen zu können.

Über die axialen Nuten 50 ist die Magnethalterung 40 bzw. der Verbindungsabschnitt 42 mit der radialen Außenseite 25 der Rotorwelle 23 verklebt.

Wie Fig. 13 des Weiteren zeigt, weist der Magnetaufnahmeabschnitt 41 vorzugsweise einen größeren Außendurchmesser als der Verbindungsabschnitt 42 auf. Der Magnet 31 kann auf diese Weise einen größeren Durchmesser als das Rotorwellenende 23A aufweisen.

Der Übergang zwischen dem Magnetaufnahmeabschnitt 41 und dem Verbindungsabschnitt 42 ist vorzugsweise sprunghaft ausgebildet, kann aber auch stetig ausgebildet sein.

Nachfolgend wird eine fünfte Ausführungsform beschrieben, wobei lediglich auf die Unterschiede zur vierten Ausführungsform eingegangen wird.

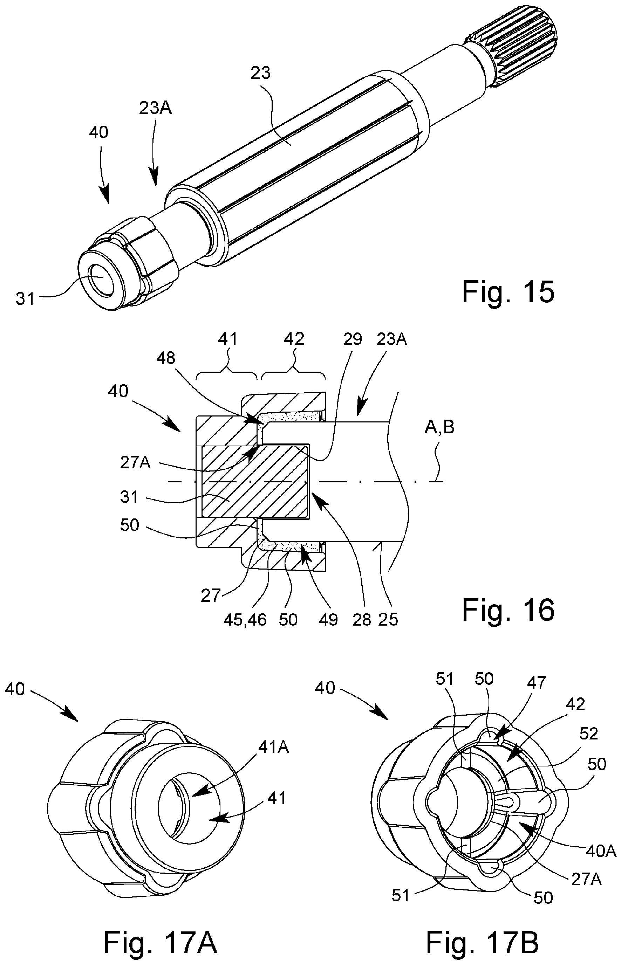

In Fig. 15 ist die Rotorwelle 23 mit der Magnethalterung 40 und dem Magneten 31 im montierten Zustand gemäß der fünften Ausführungsform in einer perspektivischen Ansicht gezeigt. Fig. 16 zeigt die Rotorwelle 23, die Magnethalterung 40 und den Magneten 31 aus Fig. 15 in einem Längsschnitt. In Fig. 17A ist die Magnethalterung 40 in einer perspektivischen Ansicht von oben und in Fig. 17B in einer perspektivischen Ansicht von unten gemäß der fünften Ausführungsform gezeigt.

Gegenüber den vorherigen Ausführungsformen unterscheidet sich die fünfte Ausführungsform darin, dass der Magnet 31 als Stabmagnet ausgebildet ist.

Der Hauptunterschied zur vierten Ausführungsform besteht darin, dass der Magnet 31 als, insbesondere zylinderförmiger, Stabmagnet ausgebildet ist.

Unter dem Begriff "Stabmagnet" ist vorliegend zu verstehen, dass die maximale Erstreckung des Magneten 31 im montierten Zustand in axialer Richtung größer oder gleich der maximalen Erstreckung in radialer Richtung ist.

Der Magnet 31 ist vorzugsweise kraftschlüssig im Magnetaufnahmeabschnitt 41 der Magnethalterung 40 fixiert bzw. gehalten. Der Magnet 31 kann im montierten Zustand in den Verbindungsabschnitt 42 hineinragen, wie in Fig. 16 gezeigt ist. Insbesondere kann vorzugsweise zumindest im Wesentlichen die eine Hälfte des Magneten 31 im Magnetaufnahmeabschnitt 41 gehalten und die andere Hälfte im Verbindungsabschnitt 42 angeordnet sein. Es ist jedoch auch möglich, dass mehr oder weniger als die Hälfte des Magneten 31 im Magnetaufnahmeabschnitt 41 gehalten bzw. angeordnet ist.

Die Rotorwelle 23 weist vorzugsweise eine Ausnehmung 28 zur wenigstens teilweisen axialen Aufnahme des Magneten 31 auf. Die Ausnehmung 28 erstreckt sich vorzugsweise ausgehend von der Stirnseite 26 in axialer Richtung, wie Fig. 16 zeigt. Die Ausnehmung 28 ist vorzugsweise zylinderförmig ausgebildet. Es ist alternativ auch möglich, dass die Ausnehmung 28 eine andere Form, beispielsweise eine polygonförmige Querschnittsfläche aufweist.

Vorzugsweise ist der Magnet 31 im montierten Zustand abschnittsweise innerhalb der Ausnehmung 28 angeordnet.

Vorzugsweise ist zwischen dem Magneten 31 und der Ausnehmung 28 eine Spielpassung ausgebildet. Unter dem Begriff "Spielpassung" ist allgemein zu verstehen, dass das innere Kleinstmaß der aufnehmenden Komponente immer größer ist als das äußere Höchstmaß der aufgenommenen Komponente.

Aufgrund der Spielpassung entsteht zwischen dem Magneten 31 und der Ausnehmung 28 ein Führungskanal 29 bzw. Hohlraum für Klebstoff 46, über den Klebstoff 46 zwischen der Ausnehmung 28 und dem Magneten 31 verteilt werden kann, und zwar in radialer und axialer Richtung.

Der Magnet 31 ist im montierten Zustand vorzugsweise mit der Ausnehmung 28, insbesondere der Innenwand der Ausnehmung 28, verklebt, wie Fig. 16 veranschaulicht.

Der Boden 52 weist auf seiner dem Rotorwellenende 23A zugewandten Flachseite vorzugsweise wenigstens eine radiale Nuten 51 auf. Insbesondere geht die radiale Nut 51 in die axiale Nut 50 über.

Wie Fig. 17B zeigt, weist die Magnethalterung 40 vorzugsweise vier radiale Nuten 51 und vier axiale Nuten 50 auf. Es ist jedoch auch möglich mehr oder weniger Nuten 50, 51 vorzusehen.

Des Weiteren ist der Übergang zwischen dem Boden 52 bzw. der dem Rotorwellenende 23A im montierten Zustand zugewandten Flachseite des Bodens 52 und der radialen Innenseite 41A des Magnetaufnahmeabschnitts 41 vorzugsweise als, insbesondere umlaufende, Fase 27A ausgebildet. Die Fase 27A bildet im montierten Zustand zusammen mit der Rotorwelle 23 einen Verteilkanal 49 des Verteilkanalsystems 48. Durch die Fase 27A sind die radialen Nuten 51 in Umfangsrichtung miteinander verbunden. Mittels der Fase 27A kann der Klebstoff 46 gleichmäßig zwischen den radialen und/oder axialen Nuten 50, 51 verteilt werden, wie in Bezug auf das Montageverfahren noch im Einzelnen erläutert wird.

Der Magnet 31 ist vorzugsweise über die Ausnehmung 28 mit dem Rotorwellenende 23A unmittelbar verklebt. Die Magnethalterung 40 ist vorzugsweise über den Boden 52, insbesondere die radialen Nuten 51, mit der axialen Stirnseite 26 und über die axialen Nuten 50 mit der radialen Außenseite 25 des Rotorwellenendes 23A unmittelbar verklebt, wie Fig. 16 im Einzelnen zeigt.

Im Folgenden wird das Montageverfahren der Magnethalterung 40 mit dem Magneten 31 und der Rotorwelle 23 anhand der fünf verschiedenen Ausführungsformen im Einzelnen beschrieben. Dabei wird insbesondere auf die jeweiligen Besonderheiten eingegangen, wobei gleiche bzw. ähnliche Merkmale nicht wiederholt werden.

Alle fünf Ausführungsformen verbindet die Tatsache, dass zunächst der Magnet 31 mit der Magnethalterung 40 verbunden werden kann. Insbesondere kann der Magnet 31 in die Magnethalterung 40 eingeschoben bzw. eingesteckt werden, vorzugsweise entlang der Magnethalterungsachse B. Alternativ kann die Magnethalterung 40 auf den Magneten 31 aufgeschoben oder aufgesteckt werden.

Der Klebstoff 46 kann anschließend, gleichzeitig oder zuvor zwischen dem Magneten 31, der Rotorwelle 23 und/oder der Magnethalterung 40 aufgetragen werden.

Die minimal aufgetragene Klebstoffmenge kann wenigstens 20 mm³, vorzugsweise wenigstens 22 mm³, insbesondere wenigstens 25 mm³, betragen. Die maximal aufgetragene Klebstoffmenge kann weniger als 40 mm³, insbesondere weniger als 38 mm³, insbesondere weniger als 36 mm³, betragen.

Im Anschluss kann die Magnethalterung 40 mit der Rotorwelle 23 verbunden werden, insbesondere durch Aufschieben bzw. Aufstecken der Magnethalterung 40 auf die Rotorwelle 23. Das Rotorwellenende 23A kann alternativ auch in die Magnethalterung 40 eingeschoben bzw. eingesteckt werden.

Insbesondere kann die mit dem Magneten 31 verbundene Magnethalterung 40 derart auf die Rotorwelle 23 aufgeschoben werden, dass die Magnethalterung 40 und die Rotorwelle 23 kraftschlüssig und/oder formschlüssig miteinander verbunden werden und der Magnet 31 und/oder die Magnethalterung 40 mit der Rotorwelle 23 verklebt werden/wird.

Bei allen Ausführungsformen kann auf die Innenseite 40A der Magnethalterung 40, insbesondere des Verbindungsabschnitts 42, ein Aktivator zur Beschleunigung der Klebstoffaushärtung aufgetragen werden. Der Aktivator kann insbesondere im Bereich des Verteilkanalsystems 48 aufgetragen werden.

Alternativ oder zusätzlich ist es auch möglich, einen Aktivator zur Beschleunigung der Klebstoffaushärtung auf das Rotorwellenende 23A und/oder den Magneten 31 aufzutragen.

Der Aktivator kann Metallionen aufweisen bzw. bereitstellen, um eine besonders gute Verbindung zwischen der Magnethalterung 40 aus Kunststoff, dem Magneten 31 und der insbesondere metallischen Rotorwelle 23 zu erzeugen.

Es ist zudem bei allen Ausführungsformen möglich, das Rotorwellenende 23A und/oder die Magnethalterung 40 vor dem Verbinden der beiden vorgenannten Komponenten, insbesondere mittels eines Laserverfahrens, zur Verbesserung der Adhäsion zu bearbeiten.

Alternativ oder zusätzlich ist es auch möglich, den Magneten 31, insbesondere mittels eines Laserverfahrens, zur Verbesserung der Adhäsion zu bearbeiten.

So kann beispielsweise eine Anpassung bzw. Bearbeitung der Oberfläche zur Verbesserung der Adhäsion mittels eines Laserverfahrens erfolgen. Auch können die Oberflächen mittels eines Laserverfahrens gereinigt werden, um die Adhäsion zu verbessern.

Nachfolgend wir das Montageverfahren in Bezug auf die erste Ausführungsform anhand der Fig. 18A bis Fig. 18C beschrieben, wobei insbesondere auf Besonderheiten der ersten Ausführungsform eingegangen wird.

Die Figuren 18A bis 18C zeigen den Montageprozess der Magnethalterung 40 und des Magneten 31 mit der Rotorwelle 23 gemäß der ersten Ausführungsform.

Gemäß der ersten Ausführungsform kann der Magnet 31 in einer ersten Montagerichtung X in die Magnethalterung 40, insbesondere den Magnetaufnahmeabschnitt 41, eingesteckt bzw. eingeschoben werden, wie Fig. 18A zeigt. Die Montagerichtung X ist vorzugsweise parallel zur Magnethalterungsachse B angeordnet oder koaxial zu dieser ausgerichtet. Alternativ kann auch die Magnethalterung 40 entgegen der ersten Montagerichtung X auf den Magneten 31 aufgeschoben bzw. aufgesteckt werden.

Gleichzeitig oder im Anschluss kann der Klebstoff 46 auf die axiale Stirnseite 26 des Rotorwellenendes 23 aufgebracht werden. Alternativ ist es auch möglich, den Klebstoff 46 auf den Magneten 31 aufzutragen. Es ist auch möglich, den Klebstoff 46 aufzutragen bevor der Magnet 31 in die Magnethalterung 40 eingesteckt bzw. eingeschoben wird.

Im Anschluss kann die mit dem Magneten 31 verbundene Magnethalterung 40 in einer zweiten Montagerichtung Y auf das Rotorwellenende 23A geschoben bzw. aufgesteckt werden. Die zweite Montagerichtung Y ist vorzugsweise der ersten Montagerichtung X entgegengesetzt. Die zweite Montagerichtung Y ist vorzugsweise parallel zur Magnethalterungsachse B angeordnet oder koaxial zu dieser ausgerichtet.

Beim Aufschieben der Magnethalterung 40 auf das Rotorwellenende 23A wird das Halteelement 44 zunächst radial nach außen gedrückt. Erreicht die Magnethalterung 40 ihre Endposition bzw. kommt der Magnet 31 mit der Stirnseite 26 in Eingriff, rastet das Halteelement 44 in der Halteausformung 24 des Rotorwellenendes 23A ein. Durch die Rastverbindung zwischen dem Halteelement 44 und der Halteausformung 24 ist die Magnethalterung 40 axialfest, insbesondere gegen ein Abziehen, an der Rotorwelle 23 gehalten bzw. gesichert.

Durch das Aufsetzen der Magnethalterung 40 auf das Rotorwellenende 23A wird der sich zwischen der Stirnseite 26 und dem Magneten 31 befindliche Klebstoff 46 gleichmäßig zwischen der Stirnseite 26 und dem Magneten 31 insbesondere in radialer Richtung verteilt. Auf diese Weise kann die Klebverbindung 45 zwischen der Stirnseite 26 und dem Magneten 31 erzeugt werden.

Steht eine ausreichende Menge an Klebstoff 46 zur Verfügung, kann gleichzeitig der Klebstoff 46 zu den bzw. in die axialen Nuten 50 geleitet werden. Der Klebstoff 46 kann über die axialen Nuten 50 in axialer Richtung entlang der Außenseite 25 der Rotorwelle 32 geleitet werden. Zwischen den axialen Nuten 50 und der radialen Außenseite 25 kann auf diese Weise die Klebverbindung 45 erzeugt werden.

Alternativ oder zusätzlich kann überschüssiger Klebstoff 46 über die axialen Nuten 50 in Richtung des der Rotorwelle 23 abgewandten Endes der Magnethalterung 40 geleitet werden. Wird der Klebstoff 46 in diese Richtung geleitet, kann der Magneten 31 mit der Magnethalterung 40 bzw. dem Magnetaufnahmeabschnitt 41 verklebt werden.

Hat die Magnethalterung 40 ihre bestimmungsgemäße Position relativ zur Rotorwelle 23 erreicht, kann der Klebstoff 46 ausgehärtet werden. Hierzu kann der Klebstoff 46 mittels UV-Licht bestrahlt werden. Da die Magnethalterung 40 transparent für UV-Licht ist, kann der Klebstoff 46 mittels der Bestrahlung mit UV-Licht im montierten Zustand bestrahlt und ausgehärtet werden. Die Bestrahlung mit UV-Licht erfolgt dann insbesondere durch die Magnethalterung 40 hindurch. Die Aushärtung des Klebstoffs 46 kann durch die Bestrahlung besonders schnell erfolgen.

Bereiche der Klebverbindung 45 bzw. des Klebstoffs 46, die durch den Magneten 31 teilweise oder vollständig verdeckt bzw. abgeschirmt sind, können alternativ oder zusätzlich anaerob ausgehärtet werden.

Durch die optionale fluoreszierende Komponente des Klebstoffs 46 kann die Ausbildung der Klebverbindung 45 insbesondere optisch überwacht werden. Fehlerhaft ausgebildete Klebverbindungen 45 können auf diese Weise erkannt und aussortiert werden, wodurch die Prozesssicherheit erhöht werden kann.

Fig. 18C zeigt die Klebverbindung 45 zwischen dem Magneten 31 bzw. der Magnethalterung 40 und der Rotorwelle 23 im montierten Zustand, wobei die Magnethalterung 40 und der Magnet 31 ausgeblendet und somit nicht dargestellt sind. Die Klebverbindung 45 wird vorzugsweise zwischen der axialen Stirnseite 26 der Rotorwelle 23 und dem Magneten 31, insbesondere der dem Rotorwellenende 23A zugewandten Seite des Magneten 31, ausgebildet. Zusätzlich kann die Magnethalterung 40 bzw. der Verbindungsabschnitt 42 mit der radialen Außenseite 25 verklebt sein.

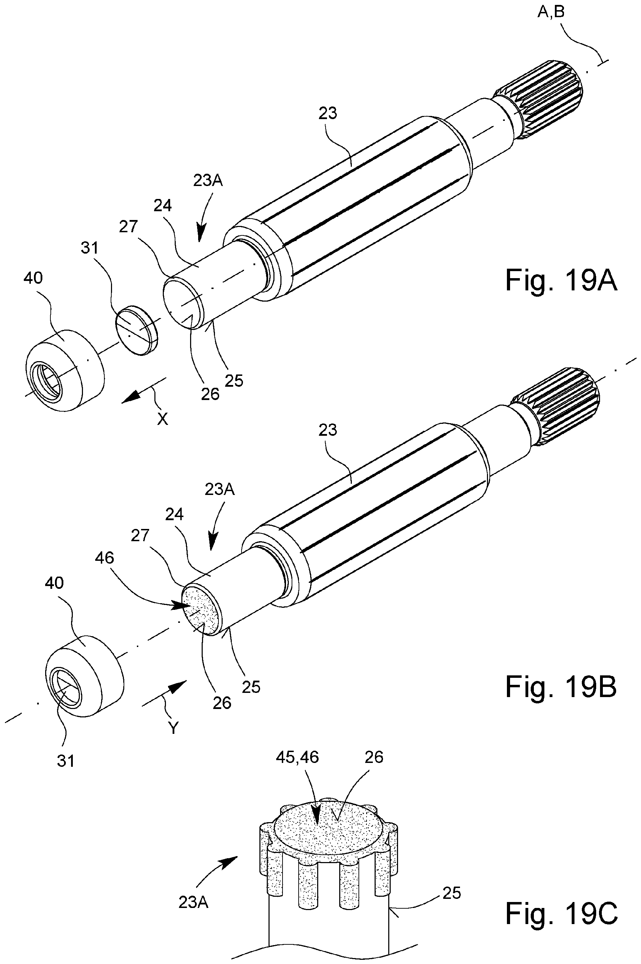

Nachfolgend wird das Montageverfahren in Bezug auf die zweite Ausführungsform anhand der Fig. 19A bis Fig. 19C beschrieben, wobei lediglich auf Unterschiede zur ersten Ausführungsform eingegangen wird.

In Fig. 19A bis Fig. 19C ist das Verfahren zur Montage des Magneten 31 mit der Magnethalterung 40 und der Rotorwelle 23 gemäß der zweiten Ausführungsform gezeigt.

Das Montageverfahren gemäß der zweiten Ausführungsform unterscheidet sich gegenüber der ersten Ausführungsform zum einen darin, dass die Magnethalterung 40 vorzugsweise auf das Rotorwellenende 23A aufgesteckt wird bis die Stirnseite 26 gegen den Boden 52 anliegt. Zum anderen wird eine geometrisch anders ausgebildete Klebverbindung 45 erzeugt.

Beim Aufschieben der mit dem Magneten 31 verbundenen Magnethalterung 40 wird vorzugsweise der zwischen dem Magneten 31 und der Stirnseite 26 befindliche Klebstoff 46 in radialer Richtung zwischen dem Magneten 31 und der Stirnseite 26 verteilt und zu den bzw. in die axialen Nuten 50 geleitet. Auf diese Weise kann die Klebverbindung 45 zwischen dem Magneten 31 und der Stirnseite 26 erzeugt werden.

Durch die Fase 27 entsteht zwischen der Magnethalterung 40 und dem Rotorwellenende 23A ein umlaufender Verteilkanal 49, der die axialen Nuten 50 miteinander verbindet, wodurch der Klebstoff 46 besonders gleichmäßig verteilt werden kann.

Der Klebstoff 46 kann während des Weiteren Aufschiebens der Magnethalterung 40 auf das Rotorwellenende 23A in den axialen Nuten 50 verteilt werden, wodurch die Klebverbindung 45 zwischen dem Verbindungsabschnitt 42 und dem Rotorwellenende 23A erzeugt wird.

Der die Klebverbindung 45 ausbildende Klebstoff 46 kann anschließend ausgehärtet werden, wie oben in Bezug auf die erste Ausführungsform beschrieben worden ist.

Ein weiterer Unterschied zur ersten Ausführungsform besteht durch die Klebverbindung 45, die während der Montage ausgebildet wird.

Fig. 19C zeigt die Klebverbindung 45 zwischen dem Magneten 31 bzw. der Magnethalterung 40 und der Rotorwelle 23 im montierten Zustand, wobei die Magnethalterung 40 und der Magnet 31 ausgeblendet und somit nicht dargestellt sind. Der Magnet 31 ist vorzugsweise über die dem Rotorwellenende 23A zugewandten Seite mit der Stirnseite 26 der Rotorwelle 23 insbesondere unmittelbar verklebt. Des Weiteren ist die Magnethalterung 40 über das Verteilkanalsystem 48 mit der Rotorwelle 23, vorzugsweise über die axialen Nuten 50 mit der radialen Außenseite 25 des Rotorwellenendes 23A, insbesondere unmittelbar, verklebt. Zusätzlich ist es auch möglich, dass die Magnethalterung 40 mit der Stirnseite 26 und/oder der Fase 27 verklebt ist.

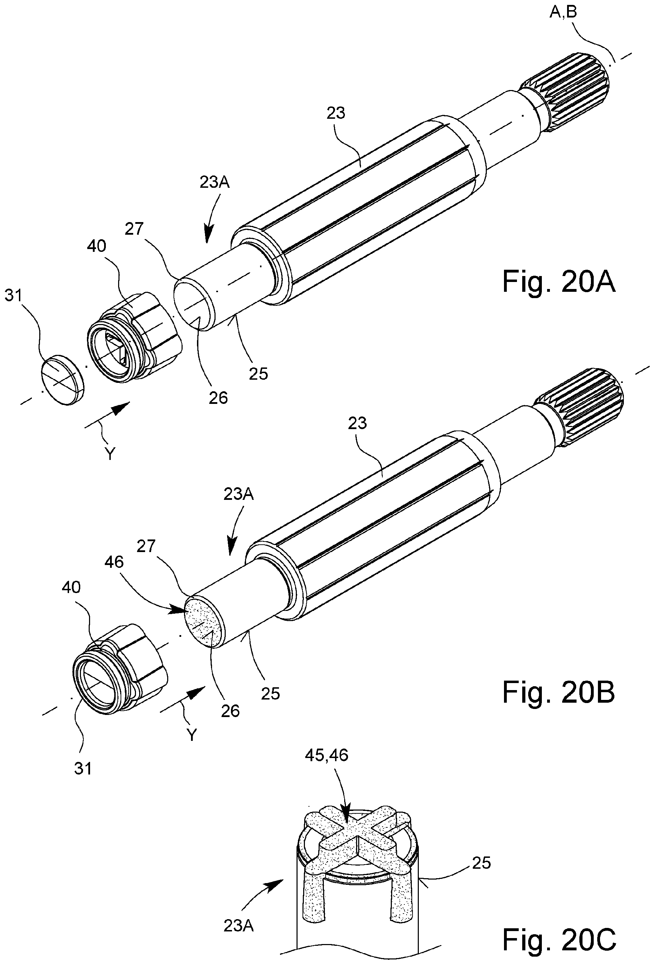

Nachfolgend wird das Montageverfahren in Bezug auf die dritte Ausführungsform anhand der Fig. 20A bis Fig. 20C beschrieben, wobei lediglich auf Unterschiede zur zweiten Ausführungsform eingegangen wird.

In Fig. 20A bis Fig. 20C ist das Verfahren zur Montage des Magneten 31 mit der Magnethalterung 40 und der Rotorwelle 23 gemäß der dritten Ausführungsform gezeigt.

Der Hauptunterschied zur zweiten Ausführungsform besteht darin, dass der Magnet 31 entlang der zweiten Montagerichtung Y in die Magnethalterung 40 eingeführt bzw. eingesteckt wird, wie Fig. 20A zeigt. Ein weiterer Unterschied besteht in der Ausbildung der Klebverbindung 45.

Während der Montage des Magneten 31 mit der Magnethalterung 40 oder im Anschluss kann der Klebstoff 46 auf die axiale Stirnseite 26 des Rotorwellenendes 23 aufgebracht werden. Alternativ ist es auch möglich, den Klebstoff 46 auf der dem Magneten 31 abgewandten Flachseite des Bodens 52 aufzutragen. Es ist auch möglich, den Klebstoff 46 aufzutragen bevor der Magnet 31 in die Magnethalterung 40 eingesteckt bzw. eingeschoben wird.

Anschließend kann die Magnethalterung 40 zusammen mit dem Magneten 31 entlang der zweiten Montagerichtung Y auf das Rotorwellenende 23A aufgesteckt bzw. aufgeschoben werden. Die Montage des Magneten 31 mit der Magnethalterung 40 erfolgt somit in der gleichen Richtung, nämlich entlang der zweiten Montagrichtung Y, wie die Montage der Magnethalterung 40 und des Magneten 31 mit der Rotorwelle 23.

Während des Aufschiebens der Magnethalterung 40 auf das Rotorwellenende 23A kann der Klebstoff 46, insbesondere durch die radialen Nuten 51, nach außen geleitet und zu den axialen Nuten 50 geführt werden. Es ist zusätzlich möglich, dass der Klebstoff 46 zwischen dem Boden 52 und der Stirnseite 26 insbesondere radial verteilt wird.

Gleichzeitig kann der Klebstoff 46 durch die radiale Nuten 51, die als Durchgangsöffnung 53 durch den Boden 52 ausgebildet sind, zum Magneten 31 geführt werden, wodurch der Magnet 31 mit dem Rotorwellenende 23A bzw. der axialen Stirnseite 26 der Rotorwelle 23 verklebt wird.

Durch die Fase 27 entsteht zwischen der Magnethalterung 40 und dem Rotorwellenende 23A ein umlaufender Verteilkanal 49, der die axialen und radialen Nuten 50, 51 miteinander verbindet, wodurch der Klebstoff 46 besonders gleichmäßig verteilt werden kann.

Der Klebstoff 46 wird vorzugsweise gleichmäßig in die axialen Nuten 50 geführt und in axialer Richtung in den axialen Nuten 50 weitergeleitet. Auf diese Weise wird die Magnethalterung 40 vorzugsweise mit der Außenseite 25 der Rotorwelle 23 verklebt. Zusätzlich kann durch die axialen Nuten 50 überschüssiger Klebstoff 46 abgeführt werden.

Alternativ ist es auch möglich, den Klebstoff 46 auf die dem Magnetaufnahmeabschnitt 41 zugewandte Flachseite des Bodens 52 aufzutragen und erst anschließend den Magneten 31 entlang der zweiten Montagerichtung Y in die Magnethalterung 40 bzw. den Magnetaufnahmeabschnitt 41 einzuführen bzw. einzustecken, insbesondere bis der Magnet 31 gegen den Boden 52 anliegt. Der Klebstoff 46 wird dabei durch die als Durchgangsöffnung 53 ausgebildete kreuzförmige Nut 51 in Richtung des Verbindungsabschnitts 42 geleitet. Im Anschluss kann die Magnethalterung 40 auf das Rotorwellenende 23A aufgesteckt bzw. aufgeschoben werden. Kommt die axiale Stirnseite 26 mit dem Klebstoff 46 in Kontakt, wird der Klebstoff 46, wie oben beschrieben, verteilt und in die axialen Nuten 50 geleitet.

Der die Klebverbindung 45 ausbildende Klebstoff 46 kann anschließend ausgehärtet werden, wie oben in Bezug auf die erste Ausführungsform beschrieben worden ist.

Ein weiterer Unterschied zur zweiten Ausführungsform besteht durch die geometrische Ausbildung der Klebverbindung 45, die während der Montage ausgebildet wird.

Fig. 20C zeigt die Klebverbindung 45 zwischen dem Magneten 31, der Magnethalterung 40 und der Rotorwelle 23 im montierten Zustand gemäß der dritten Ausführungsform, wobei die Magnethalterung 40 und der Magnet 31 ausgeblendet und somit nicht dargestellt sind.

Der Magnet 31 ist vorzugsweise mittels des Klebstoffs 46, der sich durch die Durchgangsöffnung 53 bzw. die durch den Boden 52 durchgehende radiale Nut 51 erstreckt, mit der Stirnseite 26 des Rotorwellenendes 23A verklebt. Gleichzeitig kann der Magnet 31 mit dem Boden 52 verklebt sein. Die Magnethalterung 40 bzw. der Verbindungsabschnitt 42 ist vorzugsweise über die axialen Nuten 50 mit der Außenseite 25 des Rotorwellenendes 23A verklebt.

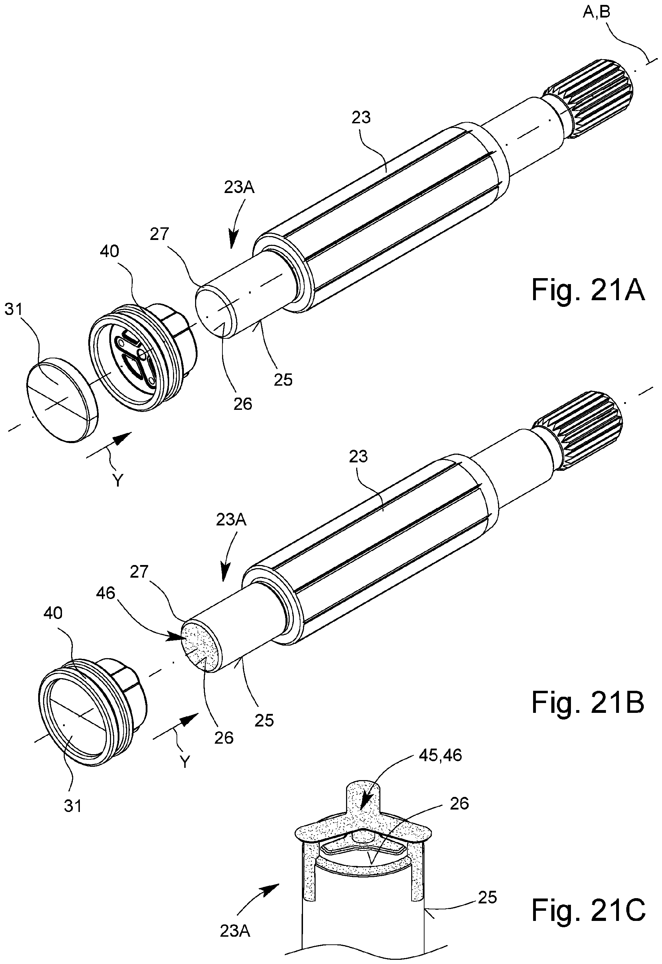

Nachfolgend wird das Montageverfahren in Bezug auf die vierte Ausführungsform anhand der Fig. 21A bis Fig. 21C beschrieben, wobei lediglich auf Unterschiede zur dritte Ausführungsform eingegangen wird.

In Fig. 21A bis Fig. 21C ist das Montageverfahren zur Montage des Magneten 31 mit der Magnethalterung 40 und der Rotorwelle 23 gemäß der vierten Ausführungsform gezeigt.

Der Hauptunterschied besteht in der Art, wie der Klebstoff 46 bei der Montage verteilt wird. Ein weiterer Unterschied besteht in der geometrischen Form der ausgebildeten Klebverbindung 45.

Zunächst kann der Magnet 31 in der zweiten Montagerichtung Y in den Magnetaufnahmeabschnitt 41 eingesteckt bzw. eingeschoben werden. Vorzugsweise liegt der Magnet 31 dann insbesondere mit einer Flachseite gegen den Boden 52 der Magnethalterung 40 an, wie Figur 13 zeigt.

Der Klebstoff 46 kann auf die axiale Stirnseite 26 der Rotorwelle 23 aufgetragen werden, wie Fig. 21B zeigt. Es ist alternativ oder zusätzlich auch möglich, den Klebstoff 46 auf die dem Magneten 31 abgewandte Seite des Bodens 52 aufzutragen.

Das Aufschieben bzw. Aufstecken der Magnethalterung 40 auf das Rotorwellenende 23A erfolgt vorzugweise entlang der zweiten Montagerichtung Y und somit in der gleichen Richtung wie das Einstecken des Magneten 31 in die Magnethalterung 40, wie Fig. 21B und Fig. 21A zeigen.

Das Aufschieben der Magnethalterung 40 auf das Rotorwellenende 23A führt dazu, dass der Klebstoff 46 zwischen dem Boden 52 und der Stirnseite 26 in der zweiten Vertiefung 56 bzw. der zweiten radialen Nut 51A verteilt und zur zentralen Durchgangsöffnung 53 geführt werden kann. Der Klebstoff 46 kann anschließend durch die zentrale Durchgangsöffnung 53 und gegebenenfalls durch die weiteren Durchgangsöffnungen 53A zum Magneten 31 geleitet werden.

Der Klebstoff 46 kann durch das weitere Aufschieben der Magnethalterung 40 innerhalb der Vertiefung 54 bzw. innerhalb der radialen Nuten 51 verteilt werden, um die Klebeverbindung 46 zwischen dem Magneten 31 und dem Boden 52 der Magnethalterung 40 auszubilden.

Der Klebstoff 46 kann mittels der radialen Nuten 51 zu den weiteren Durchgangsöffnung 53A und durch diese hindurch in die axialen Nuten 50 geleitet werden.

Durch das Aufschieben der Magnethalterung 40 auf das Rotorwellenende 23A wird der Klebstoff 46 durch den Boden 52 bzw. durch die weiteren Durchgangsöffnungen 53A zu den axialen Nuten 50 geleitet. Der Klebstoff 46 kann dann auch eine Klebverbindung 45 zwischen der Außenseite 25 des Rotorwellenendes 23A und dem Verbindungsabschnitts 42 der Magnethalterung 40 erzeugen.

Überschüssiger Klebstoff 46 kann über die axialen Nuten 50 abgeführt werden. Alternativ oder zusätzlich kann überschüssiger Klebstoff 46 in der wenigstens einen Aufnahmevertiefung 55 aufgefangen werden.

Der Klebstoff 46 kann alternativ auch auf der dem Magnetaufnahmeabschnitt 41 zugewandten Seite des Bodens 52 oder auf der dem Boden 52 zugewandten Flachseite des Magneten 31 aufgetragen werden. Im Anschluss kann dann der Magnet 31 in die Magnethalterung 40 bzw. den Magnetaufnahmeabschnitt 41 in der zweiten Montagerichtung Y eingeschoben bzw. eingesteckt werden, insbesondere bis der Magnet 31 gegen den Boden 52 anliegt. Durch das Einstecken kann der Klebstoff 46 in den radialen Nuten 51 bzw. der Vertiefung 54 verteilt und durch die zentrale Durchgangsöffnung 53 und die weiteren Durchgangsöffnungen 53A auf die dem Magneten 31 abgewandten Seite des Bodens 52 geleitet werden.

Beim Aufschieben der Magnethalterung 40 auf das Rotorwellenende 23A kann die Stirnseite 26 mit dem Klebstoff 46, der durch die zentrale Durchgangsöffnung 53 bzw. die weiteren Durchgangsöffnung 53A durch den Boden 52 geleitet wurde, in Kontakt kommen. Durch das weitere Aufschieben kann der Klebstoff 46 in der zweiten Vertiefung 56 bzw. den zweiten radialen Nuten 51A verteilt werden, um eine Klebfläche zwischen der Stirnseite 26 und dem Boden 52 zu erzeugen bzw. zu vergrö-ßern. Gleichzeitig kann Klebstoff 46 über die weiteren Durchgangsöffnungen 53A in die axialen Nuten 50 geleitet werden. Durch die zwischen den axialen Nuten 50 und der radialen Außenseite 25 gebildeten Verteilkanäle 49 kann die Magnethalterung 40 bzw. der Verbindungsabschnitt 42 mit dem Rotorwellenende 23A bzw. der Außenseite 25 verklebt werden.

Die Aushärtung des Klebstoff 46 kann dann mittels Bestrahlung mit UV-Licht erfolgen, wie in Bezug auf die erste Ausführungsform oben bereits ausgeführt worden ist.

Ein weiterer Unterschied zur dritten Ausführungsform besteht durch die geometrische Ausbildung der Klebverbindung 45, die während der Montage ausgebildet wird.

Fig. 21C zeigt die Klebverbindung 45 zwischen dem Magneten 31 bzw. der Magnethalterung 40 und der Rotorwelle 23 im montierten Zustand gemäß der vierten Ausführungsform, wobei die Magnethalterung 40 und der Magnet 31 ausgeblendet und somit nicht dargestellt sind.

Wie Fig. 21C zeigt, kann durch die Vertiefung 54 eine Klebfläche zwischen dem Magneten 31 und dem Boden 52 der Magnethalterung 40 erzeugt bzw. vergrößert werden. Mithilfe der zweiten Vertiefung 56 kann die Klebfläche zwischen der axialen Stirnseite 26 und dem Boden 52 der Magnethalterung 40 erzeugt und/oder vergrö-ßert werden.

Der Magnet 31 ist dann mit dem Boden 52 bzw. der Magnethalterung 40 unmittelbar verklebt. Der Magnet 31 ist darüber hinaus mit der axialen Stirnseite 26 des Rotorwellenendes 23A, insbesondere über die zentrale Durchgangsöffnung 53 verklebt.

Durch die zweite Vertiefung 56 bzw. zweite radiale Nuten 51A kann eine Klebfläche zwischen der Boden 52 und der axialen Stirnseite 26 des Rotorwellenendes 23A erzeugt und/oder vergrößert werden. Darüber hinaus ist der Verbindungsabschnitt 42 über die axialen Nuten 50 mit der radialen Außenseite 25 des Rotorwellenendes 23A verklebt.

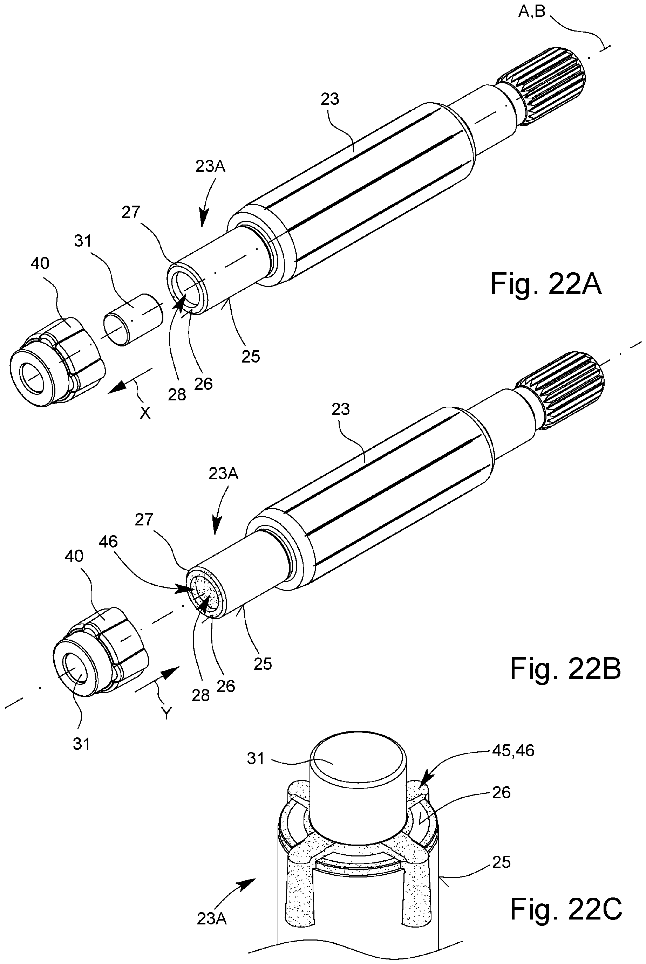

Nachfolgend wird das Montageverfahren in Bezug auf die fünften Ausführungsform anhand der Fig. 22A bis Fig. 22C beschrieben, wobei lediglich auf Unterschiede zur vierten Ausführungsform eingegangen wird.

In Fig. 22A bis Fig. 22C ist das Herstellungsverfahren zur Montage des Magneten 31 mit der Magnethalterung 40 und der Rotorwelle 23 gemäß der fünften Ausführungsform gezeigt.

Der Hauptunterschied der fünften Ausführungsform besteht darin, dass der Magnet 31 als insbesondere zylinderförmiger Stabmagnet ist. Des Weiteren wird eine anders geometrisch ausgebildete Klebverbindung 45 erzeugt.

Der Magnet 31 kann entlang der ersten Montagerichtung X in die Magnethalterung 40 eingeführt bzw. eingesteckt werden (Fig. 22A).

Im Anschluss daran und/oder währenddessen oder vorher kann Klebstoff 46 in die Ausnehmung 28 eingeführt bzw. in der Ausnehmung 28 aufgetragen werden, wie Fig. 22B zeigt. Es ist alternativ oder zusätzlich auch möglich, den Klebstoff 46 auf den Magneten 31 und/oder den Boden 52 aufzutragen.

Es ist dann möglich, die Magnethalterung 40 zusammen mit dem Magneten 31 entlang der zweiten Montagerichtung Y auf das Rotorwellenende 23A aufzuschieben bzw. aufzustecken. Dabei wird der Magnet 31 in die Ausnehmung 28 im Rotorwellenende 23A eingeführt. Dabei wird zwischen dem Magneten 31 und der Ausnehmung 28 aufgrund der Spielpassung der Führungskanal 29 bzw. Hohlraum zwischen dem Magneten 31 und der Ausnehmung 28 ausgebildet.

Es ist auch möglich, den Magneten 31 zuerst in die Ausnehmung 28 einzuschieben bzw. einzustecken und anschließend die Magnethalterung 40 auf die Rotorwelle 23 und den Magneten 31 aufzustecken bzw. aufzuschieben.

Während der Montage wird der Klebstoff 46 zwischen dem Magneten 31 und der Ausnehmung 28 verdrängt, wodurch der Klebstoff 46 durch den Führungskanal 29 in Richtung der Stirnseite 26 des Rotorwellenendes 23A geleitet wird. Im weiteren Verlauf der Montagebewegung kann der Klebstoff 46 zwischen dem Boden 52 und der Stirnseite 26 und insbesondere mittels der radialen Nuten 51 radial nach außen geleitet werden. Insbesondere wird der Klebstoff 46 in die axialen Nuten 50 geleitet.

Da die radialen Nuten 51 über den zwischen der Fase 27A und der Stirnseite 26 ausgebildeten, umlaufenden Verteilkanal 49 miteinander verbunden sind, kann der Klebstoff 46 in besonders gleichmäßiger Weise auf die radialen Nuten 51 aufgeteilt und in die axialen Nuten 50 geleitet werden. Überschüssiger Klebstoff 46 kann über die axialen Nuten 50 abgeführt werden.

Der Klebstoff 46 kann im Anschluss mittels Bestrahlung mit UV-Licht ausgehärtet werden, wie in Bezug auf die erste Ausführungsform beschrieben worden ist.

Ein weiterer Unterschied zur vierten Ausführungsform besteht durch die geometrische Ausbildung der Klebverbindung 45, die während der Montage ausgebildet wird.

Fig. 22C zeigt die Rotorwelle 23, den Magneten 31 und die Magnethalterung 40 im montierten Zustand, wobei die Magnethalterung 40 ausgeblendet bzw. nicht dargestellt ist.

Wie Fig. 16 in Verbindung mit Fig. 22 C zeigt, ist der Magnet 31 vorzugsweise über die Ausnehmung 28 mit dem Rotorwellenende 23A verklebt. Die Magnethalterung 40 ist vorzugsweise über den Boden 52, insbesondere über die radialen Nuten 51, mit der axialen Stirnseite 26 verklebt. Zusätzlich kann die Magnethalterung 40 bzw. der Verbindungabschnitt 42 insbesondere über die axialen Nuten 50 mit der radialen Außenseite 25 des Rotorwellenende 23A verklebt sein.

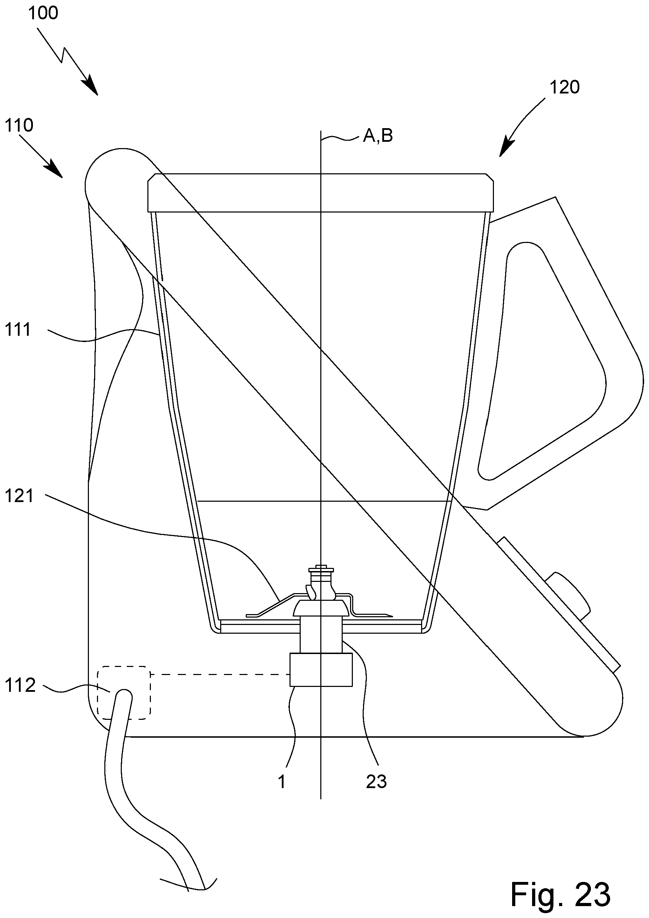

Fig. 23 zeigt eine vorschlagsgemäße Küchenmaschine 100 mit einem vorschlagsgemäßen Elektromotor 1. Bei der Küchenmaschine 100 handelt es sich vorzugsweise um eine elektrisch betriebene Multifunktions-Küchenmaschine, die zum Zerkleinern, Rühren bzw. Mischen und/oder Erhitzen bzw. Kochen von Lebensmitteln ausgebildet ist.

Die Basisstation 110 und das Gefäß 120 sind vorzugsweise elektrisch und/oder mechanisch verbunden oder verbindbar, insbesondere um ein Erhitzen und/oder Mischen/Umrühren des Lebensmittels in dem Gefäß 120 zu ermöglichen.

Fig. 23 zeigt die Küchenmaschine 100 im üblichen Gebrauchszustand bzw. in der Anschlussposition, in der das Gefäß 120 elektrisch und/oder mechanisch an die Basisstation 110 angeschlossen ist.

Die Basisstation 110 weist vorzugsweise eine Aufnahme 111 auf, um das Gefäß 120 zumindest teilweise und/oder bodenseitig aufzunehmen. Besonders bevorzugt ist das Gefäß 120 zumindest teilweise in die Basisstation 110 einsetzbar oder einhängbar, um das Gefäß 120 mechanisch und/oder elektrisch mit der Basisstation 110 zu verbinden.

Das Gefäß 120 ist mit einem Rührer 121 ausgestattet, insbesondere um Lebensmittel im Gefäß 120 zu zerkleinern und/oder zu mischen. Der Begriff "Rührer" ist vorliegend weit zu verstehen und umfasst alle mittels der Rotorwelle 23 drehbaren Einsätze der Küchenmaschine 100 zum Zerkleinern und/oder Mischen, wie beispielsweise Rühraufsätze und/oder Schneidmesser. Der Rührer 121 ist vorzugsweise am Boden des Gefäßes 120 angeordnet bzw. drehbar gelagert. Der Rührer 121 weist vorzugsweise mehrere, insbesondere austauschbare, Rührblätter auf.

Vorzugsweise weisen die Rührblätter Schneiden auf oder sind als Schneiden ausgebildet, um Lebensmittel zu zerkleinern.

Das Gefäß 120 ist mechanisch mit der Basisstation 110 verbunden oder verbindbar, um den Rührer 121 mittels der Basisstation 110 anzutreiben.

Zum Antrieb des Rührers 121 weist die Küchenmaschine 100, insbesondere die Basisstation 110, den Elektromotor 1 auf, der über die Rotorwelle 23 - optional über einen mit der Abtriebsseite verbundenen Wellenaufsatz 80 (Fig. 1) - mit dem Rührer 121 verbunden oder verbindbar ist und/oder - in der Anschlussposition - von unten formschlüssig in den Boden des Gefäßes 120 eingreift.

Der Begriffe "unten" bezieht sich vorzugsweise auf die Erstreckung der Rotationsachse A und/oder die bevorzugte Ausrichtung des Elektromotors 1 im eingebauten Zustand bzw. in Gebrauchslage, insbesondere in einer Küchenmaschine 100.

Der Elektromotor 1 ist in der Küchenmaschine 100 vorzugsweise derart eingebaut, dass sich die Sensoranordnung 30 bei der in Fig. 23 gezeigten üblichen Gebrauchslage der Küchenmaschine 100 unten an dem Elektromotor 1 bzw. unterhalb des Stators 10 und/oder des Rotorkerns 22 befindet.

Vorzugsweise entspricht die Rotationsachse A des Elektromotors 1 der Drehachse des Rührers 121 und/oder einer Mittelachse des Gefäßes 120, die mittig durch das Gefäß 120 verläuft, wie in Fig. 23 angedeutet.

Vorzugsweise ist die Mittelachse eine Längs- oder Symmetrieachse des vorzugsweise länglichen, zylindrischen und/oder zumindest im Wesentlichen rotationssymmetrischen Gefäßes 120.

Die Küchenmaschine 100, insbesondere die Basisstation 110, weist vorzugsweise eine Stromversorgung 112 auf, um den Elektromotor 1, insbesondere dessen Spulen 11, und/oder andere Einrichtungen der Küchenmaschine 100 mit elektrischem Strom zu versorgen.

Abhängig von der Drehgeschwindigkeit bzw. Drehzahl des Rührers 121 bzw. Elektromotors 1 ist die Küchenmaschine 100 vorzugsweise sowohl zum Rühren (bei kleinen Drehzahlen) als auch zum Zerkleinern (bei großen Drehzahlen) von Zutaten ausgebildet. Besonders bevorzugt ist auch ein langsames Rühren, beispielsweise mit 1 U/min oder 10 U/min, und/oder ein sehr feines bzw. definiertes Zerkleinern, beispielsweise mit 10.000 U/min, 12.000 U/min oder 15.000 U/min, möglich.

Mithilfe der Sensoranordnung 30 kann die Position und/oder die Bewegung des Rührers 121 genau ermittelt werden. Es ist dann möglich, den Rührer 121 an festgelegten Positionen starten und/oder stoppen zu lassen. Gleichzeitig kann die Bewegung des Rührers 121 in besonders gleichmäßiger Weise gesteuert werden.

Einzelne Aspekte und/oder Merkmale der vorliegenden Erfindung können unabhängig, aber auch in beliebiger Kombination realisiert werden.

### Bezugszeichenliste:

| | | | |
|---|---|---|---|
| 1 | Elektromotor | 42 | Verbindungsabschnitt |
| | | 43 | Vorsprung |
| 10 | Stator | 44 | Halteelement |
| 11 | Spule | 45 | Klebverbindung |
| 12 | Statorkern | 46 | Klebstoff |
| 12A | Statorblech | 47 | Nutsystem |
| 12B | Statorzahn | 48 | Verteilkanalsystem |
| 13 | Spulenträger | 49 | Verteilkanal |
| 14 | Anschlusseinrichtung | 50 | Nut |
| 15 | Anschlusshalterung | 51 | Nut |
| | | 51A | Nut |
| 20 | Rotor | 52 | Boden |
| 21 | Rotormagnet | 53 | Durchgangsöffnung |
| 22 | Rotorkern | 53A | Durchgangsöffnung |
| 23 | Rotorwelle | 54 | Vertiefung |
| 23A | Rotorwellenende | 55 | Aufnahmevertiefung |
| 24 | Halteausformung | 56 | Vertiefung |
| 25 | Außenseite | | |
| 26 | Stirnseite | 80 | Wellenaufsatz |
| 27 | Fase | | |
| 27A | Fase | 100 | Küchenmaschine |
| 28 | Ausnehmung | 110 | Basisstation |
| 29 | Führungskanal | 111 | Aufnahme |
| | | 112 | Stromversorgung |
| 30 | Sensoranordnung | 120 | Gefäß |
| 31 | Magnet | 121 | Rührer |
| 32 | Sensor | | |
| | | A | Rotationsachse |
| 40 | Magnethalterung | B | Magnethalterungsachse |
| 40A | Innenseite | X | Montagerichtung |
| 41 | Magnetaufnahmeabschnitt | Y | Montagerichtung |
| 41A | Innenseite | | |

## Patentansprüche

1. Elektromotor (1), insbesondere für eine Küchenmaschine (100), mit einem Stator (10) und einem innerhalb des Stators (10) drehbar um eine Rotationsachse (A) gelagerten Rotor (20) mit einer Rotorwelle (23),
wobei der Elektromotor (1) zur sensorischen Erfassung der Rotorbewegung und/oder der Rotorposition eine Sensoranordnung (30) aufweist,
wobei die Sensoranordnung (30) einen feststehenden Sensor (32), einen Magneten (31) und eine Magnethalterung (40) aufweist,
wobei der Magnet (31) drehfest mit der Rotorwelle (23) verbunden ist,
wobei der Magnet (31) kraft- und/oder formschlüssig mit der Magnethalterung (40) verbunden ist, und
wobei die Magnethalterung (40) kraft- und/oder formschlüssig mit einem Rotorwellenende (23A) der Rotorwelle (23) verbunden ist,
**dadurch gekennzeichnet,**
**dass** der Magnet (31) und/oder die Magnethalterung (40) zusätzlich mittels einer Klebverbindung (45) mit dem Rotorwellenende (23A) verklebt ist.

2. Elektromotor nach Anspruch 1, **dadurch gekennzeichnet, dass** die Magnethalterung (40) transparent für UV-Licht ausgebildet ist, wobei der die Klebverbindung (45) ausbildende Klebstoff (46) als UV-Licht-härtender Klebstoff (46) ausgebildet ist.

3. Elektromotor nach Anspruch 1 oder 2, **dadurch gekennzeichnet**, **dadurch gekennzeichnet, dass** die Magnethalterung (40) ein Nutsystem (47) zum Verteilen von Klebstoff (46) aufweist.

4. Elektromotor nach Anspruch 3, **dadurch gekennzeichnet, dass** das Nutsystem (47) im montierten Zustand zusammen mit einer radialen Außenseite (25) und/oder einer axialen Stirnseite (26) des Rotorwellenendes (23A) und/oder dem Magneten (31) ein Verteilkanalsystem (48) für Klebstoff (46) mit wenigstens einem Verteilkanal (49) bildet.

5. Elektromotor nach Anspruch 3 oder 4, **dadurch gekennzeichnet, dass** das Nutsystem (47) zumindest im Wesentlichen sternförmig ausgebildet ist.

6. Elektromotor nach einem der Ansprüche 3 bis 5, **dadurch gekennzeichnet, dass** das Nutsystem (47) wenigstens eine radiale Nut (51) und/oder axiale Nut (50) aufweist und/oder dass das Nutsystem (47) wenigstens drei, insbesondere in Umfangsrichtung gleichverteilte und/oder äquidistant zueinander angeordnete, Nuten (50, 51) aufweist.

7. Elektromotor nach einem der voranstehenden Ansprüche, **dadurch gekennzeichnet, dass** die Magnethalterung (40) zumindest im Wesentlichen becherförmig ausgebildet ist.

8. Elektromotor nach einem der voranstehenden Ansprüche, **dadurch gekennzeichnet, dass** die Magnethalterung (40) einen Magnetaufnahmeabschnitt (41) und einen Verbindungsabschnitt (42) zur Verbindung mit dem Rotorwellenende (23A) aufweist, vorzugsweise wobei der Verbindungsabschnitt (42) wenigstens eine axiale Nut (50) aufweist.

9. Elektromotor nach Anspruch 8, **dadurch gekennzeichnet, dass** die Magnethalterung (40) einen Boden (52) aufweist, wobei der Boden (52) gegen eine axiale Stirnseite (26) des Rotorwellenendes (23A) anliegt, und/oder
wenigstens eine radiale Nut (51) aufweist und/oder
wenigstens eine Durchgangsöffnung (53) zum Durchleiten von Klebstoff (46) durch den Boden (52) aufweist, und/oder
eine, insbesondere den Boden (52) vollständig durchdringende, vorzugsweise kreuzförmige Nut (51) aufweist.

10. Elektromotor nach einem der voranstehenden Ansprüche, **dadurch gekennzeichnet, dass** der Magnet (31) als, insbesondere zylinderförmiger, Stabmagnet ausgebildet ist und wobei die Rotorwelle (23) eine Ausnehmung (28) zur Aufnahme des Magneten (31) aufweist oder dass der Magnet (31) als Scheibenmagnet ausgebildet ist, vorzugsweise wobei der Magnet (31) an einem axialen Enden mit mindestens einem innenseitigen, insbesondere umlaufenden, Vorsprung (43), in eine der beiden axialen Richtungen in formschlüssigen Eingriff steht.

11. Elektromotor nach einem der voranstehenden Ansprüche, **dadurch gekennzeichnet, dass** die Magnethalterung (40) mindestens ein elastisch auslenkbares Halteelement (44) aufweist, das mit der Rotorwelle (23) formschlüssig, insbesondere mit einer Halteausformung (24) am Rotorwellenende (23A), gegen ein Abziehen der Magnethalterung (40) in Eingriff steht, vorzugsweise wobei das mindestens eine Halteelement (44) im Wesentlichen hakenartig ausgestaltet ist und/oder wobei die Halteausformung (24) als zumindest im Wesentlichen umlaufende Haltenut im Rotorwellenende (23A) ausgestaltet ist.

12. Verfahren zum Herstellen eines Elektromotors (1), insbesondere nach einem der voranstehenden Ansprüche,
wobei der Elektromotor (1) zur sensorischen Erfassung der Rotorbewegung und/oder der Rotorposition eine Sensoranordnung (30) aufweist,
wobei die Sensoranordnung (30) einen feststehenden Sensor (32), einen Magneten (31) und eine Magnethalterung (40) aufweist,
wobei der Magnet (31) drehfest mit der Rotorwelle (23) verbunden ist,
wobei Klebstoff (46) zwischen der Rotorwelle (23), der Magnethalterung (40) und/oder dem Magneten (31) aufgetragen wird, und
wobei die mit dem Magneten (31) kraftschlüssig und/oder formschlüssig verbundene Magnethalterung (40) derart auf die Rotorwelle (23) aufgeschoben wird, dass die Magnethalterung (40) und die Rotorwelle (23) kraftschlüssig und/oder formschlüssig miteinander verbunden werden und der Magnet (31) und/oder die Magnethalterung (40) mit der Rotorwelle (23) verklebt wird.

13. Verfahren nach Anspruch 12, **dadurch gekennzeichnet, dass** der Klebstoff (46) nach Aufschieben der Magnethalterung (40) auf die Rotorwelle (23) zur Aushärtung mit UV-Licht bestrahlt wird.

14. Verfahren nach Anspruch 12 oder 13, **dadurch gekennzeichnet, dass** auf die Innenseite (40A) der Magnethalterung (40), insbesondere im Bereich eines Verteilkanalsystems (48), ein Aktivator zur Beschleunigung der Klebstoffaushärtung aufgetragen wird, und/oder dass das Rotorwellenende (23A) und/oder die Magnethalterung (40) vor dem Verbinden der Magnethalterung (40) mit der Rotorwelle (23) insbesondere mittels eines Laserverfahrens zur Verbesserung der Adhäsion bearbeitet wird.

15. Küchenmaschine mit einem Elektromotor (1) nach einem der Ansprüche 1 bis 11.
